# EUROPÄISCHE PATENTSCHRIFT

(11) **EP 1 740 852 B1**
(45) Veröffentlichungstag und Bekanntmachung des Hinweises auf die Patenterteilung: **09.03.2011**
(21) Anmeldenummer: 05732321.4
(22) Anmeldetag: 22.04.2005
(51) Int. Cl.: F16H 61/12

(54) **STEUERUNGSVENTILANORDNUNG ZUR STEUERUNG EINER ANFAHRKUPPLUNG EINES AUTOMATGETRIEBES**
CONTROL VALVE ARRANGEMENT FOR CONTROLLING A START CLUTCH OF AN AUTOMATIC GEARBOX
AGENCEMENT DE SOUPAPE DE COMMANDE POUR LA COMMANDE D'UN EMBRAYAGE DE DEMARRAGE D'UNE BOITE DE VITESSES AUTOMATIQUE

(30) Priorität: 27.04.2004 DE 102004020569
(43) Veröffentlichungstag der Anmeldung: 10.01.2007
(73) Patentinhaber: ZF Friedrichshafen AG, 88038 Friedrichshafen (DE)
(72) Erfinder: GIERER, Georg, 88079 Kressbronn (DE); SCHMIDT, Thilo, 88074 Meckenbeuren (DE)
(86) Internationale Anmeldenummer: PCT/EP2005/004352
(87) Internationale Veröffentlichungsnummer: WO 2005/106291

(56) Entgegenhaltungen:
- EP-A- 0 487 128
- EP-A- 0 942 202
- EP-A- 0 982 512
- EP-A- 1 251 300
- EP-A- 1 517 059
- EP-A- 1 519 080
- EP-A- 1 522 754
- BE-A6- 1 009 149
- DE-A1- 10 118 756
- DE-A1- 10 159 640
- DE-A1- 10 238 104
- DE-A1- 19 820 389
- DE-A1- 19 943 939
- US-A- 5 314 385
- US-A- 5 787 710
- US-B1- 6 467 262

## Beschreibung

Die Erfindung betrifft eine Steuerungsventilanordnung zur Steuerung einer Anfahrkupplung eines Automatgetriebes eines Kraftfahrzeuges gemäß dem Oberbegriff des Patentanspruchs 1. Aus der EP-A-0 487 128 ist eine Steuerungsventilanordnung mit den Merkmalen des Oberbegriffes des Anspruchs 1 bekannt.

In Automatgetrieben mit automatisierter nasser Anfahrkupplung wird üblicherweise zur Aktivierung eines mechanischen Getriebenotlaufs, etwa nach Ausfall eines Getriebesteuergerätes, der Kraftschluss im Getriebe dadurch beendet, dass diese Anfahrkupplung stromlos in den geöffneten Zustand überführt wird. Diese Strategie kann insbesondere bei Fahrzuständen im fließendem Verkehr zu kritischen Zuständen führen, da dadurch nur noch ein vortriebsloses Ausrollen des Fahrzeugs möglich ist.

Ein Schließen der nassen Anfahrkupplung in einer solchen Fahrbetriebssituation ist ebenfalls aus sicherheitstechnischen Gründen nicht möglich, da der Kraftschluss nur über einen hydraulischen Kupplungsbetätigungsdruck erhalten bleibt. Sofern der Fahrzeugantriebsmotor beim Absinken der Fahrzeuggeschwindigkeit bei geschlossener Kupplung abgewürgt wird, bleibt noch eine Restfahrgeschwindigkeit übrig, in der wichtige vom Motor an sich anzutreibende Nebenaggregate wie Bremskraftverstärker oder Lenkhilfepumpe dann nicht mehr ausreichend angerieben werden können.

In Automatgetrieben mit trockener Anfahrkupplung wird bei einer Aktivierung des mechanischen Notlaufs diese Kupplung geschlossen, so dass der Abtrieb des Fahrzeugs bis zum Fahrzeugstillstand mit dem Motor antriebstechnisch verbunden bleibt. Hierbei entstehen zwar keine kritischen Fahrzustände, das Fahrzeug kann aber nach dem Fahrzeugstillstand nicht mehr bewegt bzw. weggeschoben werden.

Demnach besteht ein Bedarf an einer Steuerungseinrichtung für eine Anfahrkupplung eines Automatgetriebes eines Kraftfahrzeuges, welche in Abhängigkeit eines von der Motordrehzahl und/oder der Abtriebsdrehzahl des Getriebes den Kraftschluss im Antriebsstrang erst dann unterbricht, wenn eine bestimmte Motordrehzahl bzw. Getriebeabtriebsdrehzahl unterschritten wird, so dass kein Abwürgen des Fahrzeugantriebsmotors erfolgt, die Nebenaggregate angetrieben bleiben und dem Fahrer noch die Möglichkeit gegeben ist, eine gegebenenfalls vorhandene Gefahrenzone sicher zu verlassen. Zudem wird durch ein solches Steuerungsverhalten auch das Bewegen des Fahrzeugs im Stillstand möglich, da der Kraftfluss zwischen Motor und Getriebe unterbrochen ist.

Vor diesem Hintergrund ist aus der DE 199 43 939 A1 eine hydraulische Notsteuerung für ein Umschlingungsgetriebe bekannt, bei der eine dem Getriebe zugeordnete Kupplung in Abhängigkeit einer Drehzahl eines Fahrzeugantriebsmotors trennbar und schließbar ist. Dadurch kann bei einer Störung ein erneutes Abwürgen des Antriebsmotors bei Unterschreiten einer bestimmten Grenzdrehzahl vermieden sowie ein Anfahren bei Überschreitung einer bestimmten Drehzahl ermöglicht werden. Je nach Ausbildung der Notsteuerung kann das drehzahlabhängige Steuersignal dabei beispielsweise als hydraulischer Druck, als pneumatischer Druck oder als elektrische Spannung erzeugbar und nutzbar sein.

Zudem ist aus der DE 102 38 104 A1 ein Verfahren zum Ansteuern eines Notschaltprogramms für ein Automatgetriebe mit einer Anfahrkupplung bekannt, welches zur Realisierung eines Notlaufs auch beim Stillstand des Fahrzeugs sowie zur Verhinderung des Absinkens der Motordrehzahl unter eine Abwürgschwelle besonders ausgebildet ist. Bei diesem Verfahren ist vorgesehen, dass das Notschaltprogramm über ein von der Fahrzeuggeschwindigkeit und/oder der Motordrehzahl abhängiges Signal angesteuert wird, welches über eine Ventillogik verarbeitbar ist und bewirkt, dass im Schubbetrieb der Kraftschluss zum Motor rechtzeitig unterbrochen wird, um den Fahrzeugmotor nicht abzuwürgen.

Der Erfindung liegt die Aufgabe zugrunde, eine Steuerungsventilanordnung zur Steuerung einer Anfahrkupplung eines Automatgetriebes zu schaffen, mit der einfach, herstellkostengünstig und zuverlässig in einer Notsteuerungssituation die Anfahrkupplung dann geöffnet werden kann, wenn die Motordrehzahl und/oder die Abtriebsdrehzahl des Getriebes bzw. die Fahrgeschwindigkeit des Fahrzeugs unter einen vorbestimmten Wert fällt.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach geht die Erfindung aus von einer Steuerungsventilanordnung zur Steuerung einer Anfahrkupplung eines Automatgetriebes, mit einem Kupplungsregelventil zur Ansteuerung wenigstens einer Kupplungsbetätigungsvorrichtung, welches im Normalbetrieb des Getriebes einen zugeleiteten Versorgungsdruck in Abhängigkeit von einem Vorsteuerdruck in einen Kupplungsbetätigungsdruck zur Ansteuerung der Kupplungsbetätigungsvorrichtung umwandelt.

Diese Steuerungsventilanordnung ist zudem dadurch gekennzeichnet, dass zur Realisierung eines Notbetriebes des Getriebes bei Wegfall des Vorsteuerdrucks motordrehzahl-und/oder getriebeabtrie`bsdrehzahl- und/oder motormoment- und/oder getriebeeingangsmoment- und/oder getriebeeingangsdrehzahl- und/oder getriebeabtriebsmoment- und/oder fahrleistungsabhängig ein Aktivierungsdruck auf das Kupplungsregelventil oder direkt auf die Kupplungsbetätigungsvorrichtung leitbar ist, wodurch diese so lange in Schließstellung gehalten wird, wie die genannte Drehzahl oberhalb eines vorbestimmten Drehzahlgrenzwertes liegt.

Durch diese Ventilanordnung wird eine kostengünstig herstellbare und zuverlässig betreibbare Steuerungsvorrichtung für den Notfahrbetrieb eines Fahrzeugs mit einem Automatgetriebe geschaffen, welche dann aktiviert wird, wenn beispielsweise ein elektronisches Getriebesteuerungsgerät und/oder ein elektrisch betätigbares Kupplungsregelventil ausfällt. Dabei sorgt der von der Drehzahl des Fahrzeugantriebsmotors und/oder von der Getriebeausgangsdrehzahl abhängige Steuerungsdruck dafür, dass eine Anfahrkupplung des Automatgetriebes zur Drehmomentübertragung durch das Getriebe geschlossen bleibt, solange die Fahrgeschwindigkeit und damit die Drehzahl des Antriebsmotors nicht unter eine solche Abwürgdrehzahl fällt, bei der der Antriebsmotor seinen verbrennungsmotorischen Betrieb einstellen würde.

Sofern die Fahrgeschwindigkeit bei einem solchen Notfahrbetrieb tatsächlich soweit abgesenkt wird, dass bei geschlossener Anfahrkupplung mit dem Abwürgen des Motors zu rechnen wäre, öffnet der drehzahlgekoppelte Steuerdruck die bis dahin drehmomentübertragende Anfahrkupplung. Ein Abwürgen des Motors wird dadurch vorteilhaft vermieden, so dass von diesem wichtige Fahrzeugnebenaggregate, wie beispielsweise ein Bremskraftverstärker und eine Lenkhilfepupe problemlos weiterbetrieben werden können.

In Ausgestaltung des genannten Erfindungsprinzips wird vorgeschlagen, dass der Aktivierungsdruck von einem Selbsthalteventil über ein Aktivierungsventil zum Kupplungsregelventil oder unter Umgehung von letzterem direkt auf die Kupplungsbetätigungsvorrichtung leitbar ist, wenn ein drehzahlabhängiger Steuerdruck am Selbsthalteventil oberhalb eines diesbezüglichen Druckgrenzwertes liegt. Dabei kennzeichnet dieser Druckgrenzwert die vorgenannte Motordrehzahl, unter der der Motor abgewürgt werden würde.

Gemäß eines anderen Bestandteils einer solchen Steuerungsventilanordnung ist vorgesehen, dass der Vorsteuerdruck im Normalbetrieb auf das Selbsthalteventil und auf das genannte Aktivierungsventil wirkt. Abweichend davon kann aber auch vorgesehen sein, dass auf das Selbsthalteventil und auf das Aktivierungsventil im Normalbetrieb ein den Normalbetrieb kennzeichnender Steuerdruck, oder im Notbetrieb auf das Aktivierungsventil ein den Notbetrieb kennzeichnender Steuerdruck wirkt.

Hinsichtlich des genutzten Kupplungsregelventils wird darauf hingewiesen, dass dieses druckmittelbetätigbar sein kann. Die konkret gewählte Bauart ist nicht entscheidend für den durch die Erfindung erzielten Erfolg.

Ein vorsteuerdruckgeregeltes Kupplungsregelventil verfügt über zwei axial hintereinander angeordnete Steuerschieber, die wie alle anderen hier beschriebenen Ventilschieber sinnvollerweise in einem Schieberkasten eines hydraulischen Getriebesteuerungsgeräts in angepassten Bohrungen axialverschieblich angeordnet sind.

Zu den beiden genannten Steuerschiebern des vorsteuerdruckgeregelten Kupplungsregelventils gehört ein kurzer Steuerschieber, der an seinen gegenüberliegenden Stirnseiten von dem Aktivierungsdruck bzw. von dem Vorsteuerdruck beaufschlagbar ist, während auf eine rückstellfederferne axiale Stirnseite des längeren Steuerschiebers der Vorsteuerdruck leitbar ist.

Gemäß einer anderen Ausgestaltung der Steuerungsventilanordnung ist der Steuerschieber des Aktivierungsventils von dem Aktivierungsdruck und von dem Vorsteuerdruck beaufschlagbar. Zudem ist vorgesehen, dass der Steuerschieber des Selbsthalteventils den Aktivierungsdruck und den Vorsteuerdruck aufnimmt.

Außerdem ist es ein Kennzeichen einer erfindungsgemäß ausgebildeten Steuerungsventilanordnung, dass der Steuerschieber des Selbsthalteventils und der Steuerschieber des Aktivierungsventils an einem axialen Ende jeweils einen Steuerkolben aufweisen, an denen sich jeweils eine Rückstellfeder abstützt, während auf einen Steuerkolben am jeweils anderen axialen Ende der genannte Vorsteuerdruck einwirken kann.

Durch diese Maßnahmen wird sichergestellt, dass der Steuerschieber des Selbsthalteventils bei fehlendem Vorsteuerdruck und einem drehzahlabhängigen Druck, der unterhalb des genannten Grenzdrucks liegt, soweit axial durch die Rückstellfeder verschoben wird, dass auch ein erneutes Ansteigen des drehzahlabhängigen Drucks nicht mehr bewirken kann, dass eine Anfahrkupplung geschlossen wird. Dies ist sicherheitstechnisch von besonderem Vorteil, da dadurch der Fahrzeugantriebsmotor bei Fahrzeugstillstand und nun zwangsweise geöffneter Anfahrkupplung beispielsweise für Prüfzwecke in seiner Drehzahl hochgefahren werden kann, ohne dass dabei ein ungewolltes Anfahren des Fahrzeugs erfolgen würde.

Des weiteren wird es als vorteilhaft beurteilt, wenn die axial aufeinander weisenden Stirnseiten der beiden Steuerschieber im vorsteuerdruckgeregelten Kupplungsregelventil mit dem erwähnten Vorsteuerdruck beaufschlagbar sind. Zudem ist in diesem Zusammenhang vorgesehen, dass das von der mit dem Vorsteuerdruck beaufschlagbaren Stirnseite wegweisende Ende des axial längeren Steuerschiebers des Kupplungsregelventils von einer Rückstellfeder mit einer Rückstellkraft belastbar ist.

Eine solche Rückstellfeder ist dabei an einem solchen Kolben des axial längeren Steuerschiebers des Kupplungsregelventils abstützt, dessen beiden Stirnseiten von dem geregelten Kupplungsbetätigungsdruck beaufschlagbar sind.

Bei dem Aktivierungsventil sorgt die zugeordnete Rückstellfeder vorteilhaft dafür, dass bei einem Wegfall des Vorsteuerdrucks der Steuerschieber dieses Ventils ohne weitere Hilfskraftunterstützung in diejenige Position verschoben wird, in der der vom Selbsthalteventil zugeführte Aktivierungsdruck an das wenigstens eine durch den Vorsteuerdruck beaufschlagbare Kupplungsregelventil weiterleitbar ist.

Hinsichtlich der erwähnten Kupplungsbetätigungsvorrichtung wird bevorzugt, dass diese einen in einem Zylinder geführten Kolben aufweist, der von einer den Kolben koaxial umschließenden Rückstellfeder mit einer in Kupplungsöffnungsrichtung wirkenden Rückstellkraft beaufschlagbar ist. Durch diesen Aufbau wird bei einem Wegfall des Vorsteuerdrucks bzw. eines anderen Steuerdrucks oder elektrischen Stellsignals sowie bei einem zu niedrigen drehzahlabhängigen Steuerdruck dieser Kolben durch die Federkraft axial soweit in den Zylinder zurückgeschoben, dass zuverlässig eine einmal im Rahmen des Notbetriebs des Getriebes geöffnete Kupplung auch weiterhin geöffnet bleibt.

Eine weitere Ausgestaltung der Erfindung sieht vor, dass der dem Kupplungsregelventil zuführbare Versorgungsdruck das gleich Druckniveau aufweist wie der Aktivierungsdruck. Dadurch kann vorteilhaft einerseits auf die gleiche Druckquelle zurückgegriffen werden, und andererseits die Anfahrkupplung auch dann mit der im Normalbetrieb üblichen Kupplungsschließkraft schlupffrei beaufschlagt werden, wenn der Aktivierungsdruck direkt, also unter Umgehung eines Kupplungsregelventils an die Kupplungsbetätigungsvorrichtung geleitet wird.

In diesem Zusammenhang wird darauf hingewiesen, dass gemäß einer anderen Ausgestaltung der Erfindung vorgesehen sein kann, dass der genannte Aktivierungsdruck demjenigen Druckmittelstrom entnommen wird, der im Normalbetrieb für den Schlupfbetrieb der wenigstens einen Anfahrkupplung genutzt wird.

Da es sinnvoll sein kann, dass die geschilderte Selbsthaltefunktion der Steuerungsventilanordnung bei eingelegtem Rückwärtsgang nicht aktivierbar sein soll, sieht eine weitere Ausgestaltungsform der Erfindung vor, einen geschilderten Notbetrieb des Getriebes im Rückwärtsgang nicht zuzulassen.

Eine spezielle Ausführungsvariante einer erfindungsgemäß ausgebildeten Steuerungsventilanordnung sieht vor, dass im Normalbetrieb des Getriebes ein separates Ansteuersignal bzw. ein separater Ansteuerdruck zur Betätigung des Aktivierungsventils sowie des Selbsthalteventils genutzt wird, während nur das Kupplungsregelventil von dem Vorsteuerdruck beaufschlagt wird.

Demnach ist in dieser Variante der Vorsteuerdruck nur auf die rückstellfederferne Stirnseite des axial längeren Steuerschiebers sowie auf die gegenüberliegende Stirnseite des kürzeren Steuerschiebers des Kupplungsregelventils leitbar. Darüber hinaus wird das Selbsthalteventil sowie das Aktivierungsventil an deren rückstellfederfernen Enden mit einem den Normalbetrieb des Getriebes kennzeichnenden Steuerdruck beaufschlagt. Bei einem Wegfall dieses Steuerdrucks ist zur Realisierung eines Getriebenotbetriebs der Aktivierungsdruck auf das Kupplungsregelventil schaltbar. Dadurch wird die Kupplungsbetätigungsvorrichtung bei Wegfall des Vorsteuerdrucks solange in ihrer Schließposition gehalten, bis der drehzahlabhängige Steuerdruck am Selbsthalteventil den vorbestimmten Druckgrenzwert unterschreitet.

Eine andere Variante der Steuerungsventilanordnung sieht vor, dass das Kupplungsregelventil und das Selbsthalteventil mit dem Vorsteuerdruck beaufschlagbar sind, während das Aktivierungsventil mit einem inversen Ansteuerdruck beaufschlagbar ist, welcher auf das von der Rücksteller beaufschlagte Ende des Steuerschiebers dieses Ventils wirkt.

Demnach ist vorgesehen, dass der Vorsteuerdruck auf die rückstellfederferne Stirnseite des Steuerschiebers des Selbsthalteventils und auf die rückstellfederferne Stirnseite des langen Steuerschiebers des Kupplungsregelventils leitbar ist, dass das rückstellfederferne axiale Ende des Ventilschiebers des Aktivierungsventils sowie ein Druckraum des Aktivierungsventils mit dem Aktivierungsdruck beaufschlagbar ist, dass auf die rückstellfederbelastete Stirnseite des Ventilschiebers des Aktivierungsventils zur Auslösung eines Notbetriebs des Getriebes ein Notbetriebsteuerdruck leitbar ist, und dass nach Wegfall des Vorsteuerdrucks der Aktivierungsdruck von dem Aktivierungsventil auf das Kupplungsregelventil schaltbar ist.

Durch diesen Aufbau wird die Kupplungsbetätigungsvorrichtung so lange in ihrer Schließposition gehalten, bis der drehzahlabhängige Steuerdruck am Selbsthalteventil den vorbestimmten Druckgrenzwert unterschreitet.

Die Erfindung beschränkt sich nicht auf Anfahrkupplungsbetätigungsanordnungen für nur einem Anfahrelement. So kann auch vorgesehen sein, dass von einer erfindungsgemäß ausgebildeten Steuerungsventilanordnung zwei im Notbetriebsfall des Getriebes alternativ zueinander ansteuerbare Anfahrkupplungen vorhanden sind. In dem nachfolgend beschriebenen Fall wird bei einer Aktivierung des Notbetriebs des Getriebes eine der beiden Anfahrkupplungen so lange in ihrer Schließstellung gehalten, wie der drehzahlabhängige Steuerdruck oberhalb des genannten Druckgrenzwertes liegt.

So ist eine Steuerungsventilanordnung vorgesehen, bei der ein erster Vorsteuerdruck der rückstellfederfernen Stirnseite eines federbelasteten Steuerschiebers eines ersten Kupplungsregelventils und ein zweiter Vorsteuerdruck der rückstellfederfernen Stirnseite eines federbelasteten Steuerschiebers eines zweiten Kupplungsregelventils zuleitbar ist, dass die beiden Kupplungsregelventile jeweils eine von zwei Kupplungsbetätigungsvorrichtungen mit jeweils einem Kupplungsbetätigungsdruck beaufschlagen, und dass die beiden Vorsteuerdrücke einem Wechselventil zuleitbar sind, mittels dem die rückstellfederfernen Stirnseiten der Steuerschieber des Aktivierungsventils und des Selbsthalteventils wechselweise mit dem höheren der beiden Vorsteuerdrücke belastbar sind.

Nach Wegfall der beiden Vorsteuerdrücke sowie bei Vorliegen eines ausreichend hohen drehzahlabhängigen Steuerdrucks am Selbsthalteventil ist der Aktivierungsdruck von dem Selbsthalteventil über das Aktivierungsventil an ein Selektionsventil weiterleitbar, mittels dem in Abhängigkeit von dessen Schaltstellung der Aktivierungsdruck an die rückstellfederferne Stirnseite des kurzen Steuerschiebers des ersten Kupplungsregelventils oder an die rückstellfederferne Stirnseite des kurzen Steuerschiebers des zweiten Kupplungsregelventils weiterleitbar ist.

Dadurch wird die eine Kupplungsbetätigungsvorrichtung so lange in ihrer Schließposition gehalten, bis der drehzahlabhängige Steuerdruck am Selbsthalteventil den vorbestimmten Druckgrenzwert unterschreitet, während die zweite Kupplungsbetätigungsvorrichtung in einer Geöffnet-Stellung gebracht oder gehalten wird.

Bei einer solchen Steuerungsventilanordnung kann zudem vorgesehen sein, dass das rückstellfederferne Ende des Steuerschiebers im Selektionsventil mit dem geregelten Kupplungsbetätigungsdruck des ersten Kupplungsregelventils beaufschlagbar ist, so dass dann, wenn dieser geregelte Kupplungsbetätigungsdruck einen vorgegebenen Druckwert unterschreitet, der Steuerschieber des Selektionsventils axial in seine zweite Schaltstellung bringbar ist, in der der Aktivierungsdruck von diesem Selektionsventil an die rückstellfederferne Stirnseite des kurzen Steuerschiebers des zweiten Kupplungsregelventils weiterleitbar ist.

Demzufolge wirkt der kurze Steuerschieber auf die rückstellfederferne Stirnseite des federbelasteten langen Steuerschiebers dieses zweiten Kupplungsregelventils, so dass ein Versorgungsdruck als Kupplungsbetätigungsdruck zum notbetrieblichen Verstellen bzw. Halten der zweiten Kupplungsbetätigungsvorrichtung in Schließrichtung an dieselbe weiterleitbar ist.

Eine weitere Variante einer erfindungsgemäß ausgebildeten Steuerungsventilanordnung sieht hinsichtlich ihrer Steuerungsfunktion vor, dass zwei Kupplungsbetätigungsvorrichtungen jeweils auf eine von zwei Anfahrkupplungen wirken können, wobei zur Realisierung eines Notbetriebs des Getriebes diejenige Betätigungsvorrichtung bzw. Kupplung in ihrer Schließstellung gehalten wird, die zuletzt in Schließrichtung betätigt war.

Bei einer solchen Steuerungsventilanordnung ist vorgesehen, dass ein erster Vorsteuerdruck der rückstellfederfernen Stirnseite eines federbelasteten Steuerschiebers eines ersten Kupplungsregelventils sowie ein zweiter Vorsteuerdruck der rückstellfederfernen Stirnseite eines federbelasteten Steuerschiebers eines zweiten Kupplungsregelventils zuleitbar ist, dass die beiden Kupplungsregelventile jeweils eine von zwei Kupplungsbetätigungsvorrichtungen mit jeweils einem Kupplungsbetätigungsdruck beaufschlagen, dass die beiden Vorsteuerdrücke einem Wechselventil zuleitbar sind, mittels dem die rückstellfederferne Stirnseite des Steuerschiebers des Aktivierungsventils wechselweise mit dem höheren der beiden Vorsteuerdrücke beaufschlagbar ist.

Zudem sieht diese Steuerungsventilanordnung vor, dass ein drehzahlabhängiger Steuerdruck dem Steuerschieber des Selbsthalteventils zuleitbar ist, dass nach Wegfall der beiden Vorsteuerdrücke sowie bei Vorliegen eines vorbestimmten drehzahlabhängigen Steuerdrucks am Selbsthalteventil der Aktivierungsdruck von dem Selbsthalteventil über das Aktivierungsventil an ein rückstellfederloses Selektionsventil weiterleitbar ist, mittels dem in Abhängigkeit von dessen Schaltstellung der Aktivierungsdruck an die rückstellfederferne Stirnseite des kurzen Steuerschiebers des ersten Kupplungsregelventils oder an die rückstellfederferne Stirnseite des kurzen Steuerschiebers des zweiten Kupplungsregelventils weiterleitbar ist.

Des Weiteren ist dafür gesorgt, dass ein stirnseitiges Ende des Steuerschiebers im Selektionsventil mit dem geregelten Kupplungsbetätigungsdruck des ersten Kupplungsregelventils sowie sein anderes stirnseitiges Ende mit dem geregelten Kupplungsbetätigungsdruck des zweiten Kupplungsregelventils beaufschlagbar ist, so dass bei einem notfallbedingten Wegfall der beiden Vorsteuerdrücke die zuletzt in Schließstellung befindliche Kupplungsbetätigungsvorrichtung so lange in ihrer Schließposition gehalten wird, bis der drehzahlabhängige Steuerdruck am Selbsthalteventil den vorbestimmten Druckschwellwert unterschreitet.

Wie eingangs bereits erwähnt, ist der durch die Erfindung erzielte technische Erfolg nicht abhängig von der Bauform des einen bzw. der mehreren Regelventile der Steuerungsventilanordnung.

Die Erfindung sowie die geschilderten und weitere Ausführungsformen lassen sich anhand einer der Beschreibung beigefügten Zeichnung verdeutlichen. In dieser Zeichnung zeigen
- Fig. 1: eine Steuerungsventilanordnung mit einem Kupplungsregel- ventil, bei der ein Vorsteuerdruck für das Regelventil auch als Ansteuerdruck für ein Aktivierungsventil sowie für ein Selbst- halteventil genutzt wird,
- Fig. 2: eine Steuerungsventilanordnung mit einem Kupplungsregel- ventil, bei der ein separater Ansteuerdruck zur Ansteuerung des Aktivierungsventils genutzt wird,
- Fig. 3: eine Steuerungsventilanordnung mit einem Kupplungsregel- ventil, bei der ein separater Ansteuerdruck zur inversen An- steuerung des Aktivierungsventils genutzt wird,
- Fig. 4: eine Steuerungsventilanordnung mit zwei Kupplungsregelven- tilen, bei der alternativ zueinander die Vorsteuerdrücke für die beiden Regelventile auch als Ansteuerdruck für ein Aktivie- rungsventil sowie für ein Selbsthalteventil genutzt werden, sowie speziell eine von zwei Kupplungsbetätigungsvorrichtun- gen im Notbetrieb des Getriebes in ihrer Schließstellung gehalten wird,
- Fig. 5: eine Steuerungsventilanordnung wie in Fig. 4, bei der jedoch diejenige von zwei Kupplungsbetätigungsvorrichtungen im Notbetrieb des Getriebes in Schließstellung gehalten wird, welche zuletzt in einer Schließstellung befand,
- Fig. 6: sich eine nicht beanspruchte Steuerungsventilanordnung mit einem elektromagneti- schen Kupplungsregelventil, bei der ein separater Ansteuer- druck zur Ansteuerung des Aktivierungsventils genutzt wird,
- Fig. 7: eine nicht beanspruchte Steuerungsventilanordnung mit einem elektromagneti- schen Kupplungsregelventil, bei der ein separater Ansteuer- druck zur inversen Ansteuerung des Aktivierungsventils ge-
- Fig. 8: nutzt wird, eine nicht beanspruchte Steuerungsventilanordnung mit zwei elektromagneti- schen Kupplungsregelventilen, bei der ein separater Ansteu- erdruck zur inversen Ansteuerung des Aktivierungsventils ge- nutzt wird, wobei diejenige von zwei Kupplungsbetätigungs- vorrichtungen im Notbetrieb des Getriebes in Schließstellung gehalten wird, welche sich zuletzt in einer Schließstellung be- fand,
- Fig. 9: eine konstruktiver nicht beanspruchte Aufbau eines in den vorgenannten Steue- nutzbaren Selbsthalteventils, und
- Fig. 10: rungsventilanordnungen eine nicht beanspruchte Variante zu dem Selbsthalteventil gemäß Fig. 9.

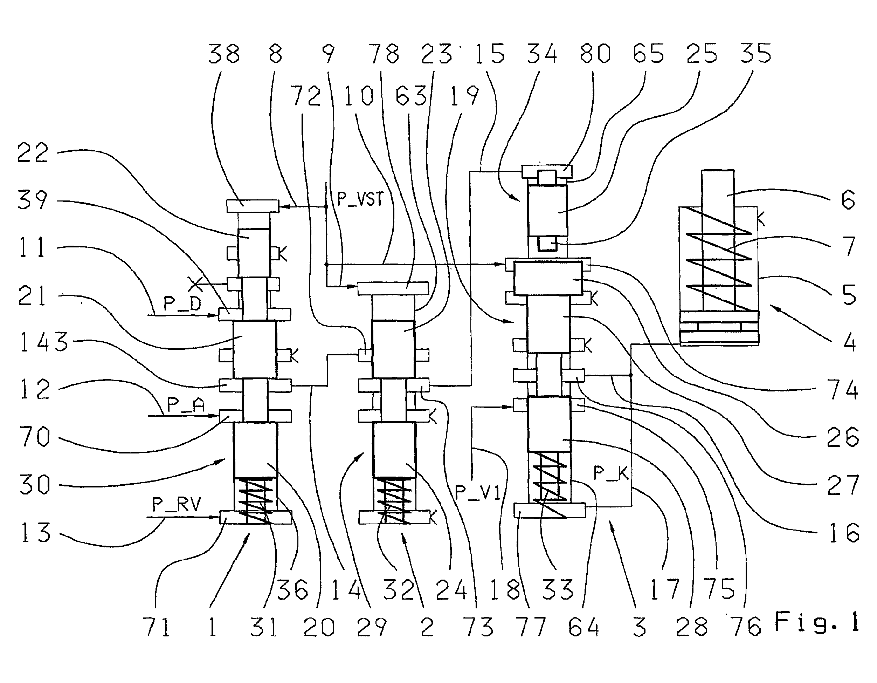

Die in Fig. 1 dargestellte und vergleichsweise einfach und kostengünstig aufgebaute Variante einer erfindungsgemäß ausgebildeten Steuerungsventilanordnung umfasst ein Selbsthalteventil 1, ein Notbetrieb-Aktivierungsventil 2 (im Folgendem Aktivierungsventil genannt), ein Kupplungsregelventil 3 sowie eine Kupplungsbetätigungsvorrichtung 4. Die Kupplungsbetätigungsvorrichtung 4 umfasst einen Zylinder 5, in dem ein Kolben 6 von einer gegen einen Betätigungsdruck wirkenden Rückstellfeder 7 koaxial umschlungen und bei einer Druckbeaufschlagung seiner federfernen Stirnseite derart in eine Schließrichtung verschiebbar ist, dass eine Kupplung des Getriebes zur Drehmomentübertragung geschlossen wird.

Die hier nicht dargestellte, dem Fachmann aber an sich bekannte Kupplung gehört zu einem Automatgetriebe, welches als Stufenautomat auf der Basis eines Planetengetriebes, als stufenlose sein Übersetzungsverhältnis änderndes Getriebe oder als lastschaltendes automatisiertes Schaltgetriebe ausgebildet sein kann. Für den Fall, dass die Steuerungsventilanordnung für ein Doppelkupplungsgetriebe ausgebildet sein soll, werden bevorzugt zwei Regelventile sowie zwei Kupplungsbetätigungsvorrichtungen genutzt, worauf weiter unten eingegangen wird.

Die genannten Ventile 1, 2 und 3 sind in einem nicht gezeigten Schieberkasten einer hydraulischen Steuerungsvorrichtung für das Getriebe angeordnet, wobei jedes Ventil mindestens einen Steuerschieber aufweist, welcher Druckräume öffnend, verbindend und/oder schließend von Hydraulikdrücken und/oder Rückstellfederkräften axial bewegbar ist.

Bei allen nachfolgend vorgestellten Ausführungsvarianten ist das Selbsthalteventil 1 und das Aktivierungsventil 2 weitgehend identisch aufgebaut. So umfasst das Selbsthalteventil 1 einen Steuerschieber 30, der in einer Ventilbohrung 36 axial verschiebbar angeordnet ist. Der Steuerschieber 30 verfügt über beabstandete Steuerkolben 20, 21 und 22, wobei die freie Stirnseite des Steuerkolbens 20 von einer Rückstellfeder 31 mit einer Rückstellkraft beaufschlagbar ist. Auf das axial gegenüberliegende Ende des Steuerschiebers 30 wirkt ein Vorsteuerdruck P_VST, der einem Druckraum 38 über eine Druckleitung 8 zuführbar ist.

Zudem wird einem Druckraum 39 an dem Selbsthalteventil 1 zwischen dem Steuerkolben 21 und dem Steuerkolben 22 ein Steuerdruck P_D über eine Leitung 11 zugeführt, dessen Druckhöhe von der Drehzahl des Fahrzeugantriebsmotors und/oder von der Getriebeausgangsdrehzahl abhängt.

Des weiteren wird dem Selbsthalteventil 1 an einem Druckraum 70 zwischen den Steuerkolben 20 und 21 ein Aktivierungsdruck P_A über eine Leitung 12 zugeführt, welcher im Notbetrieb des Getriebes dafür sorgt, dass eine drehmomentübertragende Kupplung des Getriebes drehzahlabhängig geschlossen bleibt.

Schließlich ist dem Selbsthalteventil 1 ein auch die Rückstellfeder 31 aufnehmender Druckraum 71 zugeordnet, welcher über eine Leitung 13 mit einem Rückwärtsgang-Verhinderungsdruck P_RV beaufschlagbar ist. Auf dessen Steuerungsfunktion wird später eingegangen.

Hinsichtlich des Aufbaus des Aktivierungsventils 2 ist darauf hinzuweisen, dass dieses über einen Steuerschieber 29 mit zwei zueinander beabstandeten Steuerkolben 23, 24 verfügt, welcher in einer Bohrung 63 des genannten Schieberkastens axial verschiebbar angeordnet ist. Dabei ist die freie Stirnseite des Steuerkolbens 24 von der Kraft einer Rückstellfeder 32 beaufschlagbar.

Dem axial gegenüberliegenden Ende des Steuerschiebers 29 ist in einem Druckraum 78 der bereits erwähnte Vorsteuerdruck P_VST über eine Leitung 9 zuführbar. Eine Leitung 14 verbindet zudem den Druckraum 70 bzw. 143 des Selbsthalteventils 1 mit einem Druckraum 72 des Aktivierungsventils 2, wobei dieser Druckraum 72 mittels des rückstellfederfernen Steuerkolbens 23 verschlossen oder mit einem Druckraum 73 am Aktivierungsventil 2 verbunden werden kann.

Das Kupplungsregelventil 3 umfasst einen axial längeren Steuerschieber 19 mit drei Steuerkolben 26, 27 und 28 sowie einen axial kürzeren Steuerschieber 34, die in Bohrungen 64 und 65 des genannten Schieberkastens axialverschiebbar aufgenommen sind. Dabei ist der axial längere Steuerschieber 19 an dem freien Ende des Steuerkolbens 28 von einer Rückstellfeder 33 mit einer Rückstellkraft beaufschlagbar.

Der axial kürzer Steuerschieber 34 verfügt über einen Steuerkolben 25, dessen zu dem andern Steuerschieber 19 gewandtes Ende von dem bereits genannten Vorsteuerdruck P_VST beaufschlagbar ist. Diesbezüglich ist einem Druckraum 74 am Kupplungsregelventil 3 über eine Leitung 10 dieser Vorsteuerdruck P__VST zuleitbar. Auf die gegenüberliegende Stirnseite des Kolbens 25 ist der Aktivierungsdruck P_A über eine Leitung 15 leitbar, welche mit dem Druckraum 73 an dem Aktivierungsventil 2 verbunden ist.

Der axial längere Steuerschieber 19 des Kupplungsregelventils 3 verfügt über die drei genannten Steuerkolben 26, 27 und 28, wobei die beiden Kolben 26 und 27 axial unmittel benachbart zueinander angeordnet sind. Das freie und dem axial kürzeren Steuerschieber 34 gegenüberliegende Ende des Steuerkolbens 26 ist ebenfalls über den Druckraum 74 mit dem genannten Vorsteuerdruck P_VST beaufschlagbar, während das federferne Ende des Steuerkolbens 28 einem Druckraum 75 zugeordnet ist, der von einem System- bzw. Versorgungsdruck P_V1 druckbeaufschlagbar ist.

Dieser Druckraum 75 ist durch entsprechende Ansteuerung des Kupplungsregelventils 3 über den Vorsteuerdruck P_VST mit einem benachbarten Druckraum 76 verbindbar, so dass ein geregelter Kupplungsdruck P_K, eingestellt durch den Steuerkolben 28, in diesem Druckraum 76 wirken kann. Der Druckraum 76 ist zudem über eine Leitung 16 mit dem Zylinder 5 der Kupplungsbetätigungsvorrichtung 4 sowie mit einem Druckraum 77 am Kupplungsregelventil 3 verbunden, welcher auch die Rückstellfeder 33 aufnimmt.

Die Funktionsweise der Steuerungsventilanordnung gemäß Fig. 1 ist nun Folgende:
Im normalen Fahrbetrieb ist der Vorsteuerdruck P_VST so eingestellt, dass der Steuerschieber 30 am Selbsthalteventil 1 gegen die Kraft der Feder 31 soweit axialverschoben ist, dass der Steuerkolben 20 einen Weg für den Aktivierungsdruck P_A von dem Druckraum 70 über den Druckraum 143 und die Leitung 12 zu dem Druckraum 72 des Aktivierungsventils 2 öffnet.

Zudem wirkt der Vorsteuerdruck P_VST auch in dem Druckraum 78 des Aktivierungsventils 2 derart, dass dessen Steuerschieber 29 gegen die Rückstellkraft der Rückstellfeder 32 soweit axialverschoben in der Bohrung 63 angeordnet ist, dass der Druckraum 73 von dem Druckraum 72 getrennt ist.

Außerdem wird der axial längere Steuerschieber 19 des Kupplungsregelventils 3 über die Leitung 10 derart mit dem Vorsteuerdruck P_VST beaufschlagt, dass eine Steuerkante des Steuerkolbens 28 den Druckraum 75 am Kupplungsregelventil 3 mehr oder weniger stark freigibt. Auf diese Weise kann in Abhängigkeit von der Höhe des Vorsteuerdrucks P_VST der Versorgungsdruck P_V1 zu einem Kupplungsbetätigungsdruck P_K geregelt werden, mit dem die Kupplungsbetätigungsvorrichtung 4 letztlich in eine die zugeordnete Kupplung öffnende oder schließende Stellung gebracht werden kann. Selbstverständlich lassen sich auch Zwischenstellungen einstellen, in denen die Kupplung schlupfend betrieben wird.

Sofern beispielsweise durch eine Störung im Getriebesteuerungsgerät der Vorsteuerdruck P_VST wegfällt oder zumindest stark abfällt, wird der drehzahlabhängige Steuerdruck P_D am Selbsthalteventil 1 betätigungswirksam. Sofern die Motordrehzahl bzw. die Getriebeabtriebswellendrehzahl so hoch ist, dass das Abwürgen des Motors nicht zu befürchten ist, wird auch dieser Steuerdruck P_D so hoch sein, dass dieser in der Lage ist, den Steuerschieber 30 des Selbsthalteventils 1 in einer Position zu halten, in der der Aktivierungsdruck P_A über die Druckräume 70 und 143 sowie über die Leitung 14 zu dem Druckraum 72 des Aktivierungsventils 2 geleitet wird.

Diese Selbsthaltefunktion des Selbsthalteventils 1 erlischt, wenn der drehzahlabhängige Steuerdruck P**_**D unter einen vorgegebenen Wert abfällt. Dieser Druckgrenzwert kennzeichnet die Abwürgdrehzahl des Motors. In diesem Falle wird der Steuerschieber 30 durch die Kraft der Rückstellfeder 31 in Richtung zu dem Druckraum 38 axialverschoben, so dass die genannte Aktivierungsdruckversorgung des Aktivierungsventils 2 unterbrochen ist.

In einer Notbetriebssituation ist der Vorsteuerdruck P_VST auch im Druckraum 78 des Aktivierungsventils 2 weggefallen oder stark abgesenkt, so dass der Steuerschieber 29 durch die Kraft der Rückstellfeder 32 derart in Richtung zum Druckraum 78 axialverschoben ist, dass der Druckraum 72 und der Druckraum 73 miteinander verbunden sind. Dadurch wird der Aktivierungsdruck P_A über die Leitung 15 auch zu dem Druckraum 80 am Kupplungsregelventil 3 geführt, wo dieser auf den axial kurzen Steuerschieber 34 wirkt. In dessen Folge drückt der Axialabschnitt 35 des Steuerschiebers 34 auf die freie Stirnseite des Kolbens 26 des axial längeren Steuerschiebers 19, wodurch dieser gegen die Kraft der Rückstellfeder 33 axialverschoben wird. Dadurch wird trotz fehlendem Vorsteuerdruck P_VST die Verbindung zwischen dem Druckraum 75 und dem Druckraum 76 offengehalten.

Durch diese Wirkungsweise kann auch bei Wegfall des Vorsteuerdrucks P_VST über die Leitung 18, die Druckräume 75, 76 sowie die Leitung 16 ein die Kupplungsbetätigungsvorrichtung 4 in ihrer Schließposition haltender Kupplungsbetätigungsdruck P_K auf dieselbe geleitet werden. Sofern der die Motordrehzahl bzw. die Getriebeabtriebsdrehzahl derart stark abfällt, dass mit dem Abwürgen des Motorbetriebs zu rechnen ist, weist auch der drehzahlabhängige Druck P_D einen dementsprechend niedrigen Druckwert auf. Dies führt schließlich zu einem Abbruch des Notbetriebs des Getriebes, da dann die Kraft der Rückstellfeder 31 am Selbsthalteventil 1 ausreicht, um dessen Steuerschieber 30 soweit axial zu verschieben, dass die Aktivierungsdruckverbindung zwischen dem Druckraum 70 am Selbsthalteventil 1 und der Druckleitung 14 unterbrochen wird.

Als Folge davon wird auch der kurze Steuerschieber 34 am Kupplungsregelventil 3 nicht mehr mit dem Aktivierungsdruck P_A beaufschlagt, weshalb der längere Steuerschieber 19 getrieben durch die Kraft der Rückstellfeder 33 in eine solche Position verschoben wird, in der die Verbindung zwischen den Druckräumen 75 und 76 unterbrochen ist. Dadurch fällt auch der Kupplungsbetätigungsdruck im Zylinder 5 der Kupplungsbetätigungsvorrichtung 4 ab, so dass dessen Kolben 6, getrieben durch die Kraft der Rückstellfeder 7, in seine Geöffnet-Stellung verschoben wird.

Wie Fig. 1 verdeutlicht, kann die Kupplungsbetätigungsvorrichtung 4 bei einem Wiederanstieg des drehzahlabhängigen Steuerdrucks P_D nach einem Notbetrieb zunächst nicht wieder in ihre Schließstellung gebracht werden, so dass der sicherheitstechnische Vorteil erreicht ist, dass beispielsweise in einer Reparaturwerkstatt die Motordrehzahl zu Testzecken hochgedreht werden kann, ohne dass sich durch einen Anstieg des drehzahlabhängigen Drucks P_D dann automatisch ein Kraftschluss im Automatgetriebe einstellen würde.

Zudem ist erkennbar, dass die der Rückstellfeder 33 zugewandte Stirnseite des Steuerkolbens 28 des Steuerschiebers 19 über den Druckraum 76 und die Leitungen 16 und 17 ebenfalls mit dem geregelten Kupplungsbetätigungsdruck P K bzw. mit dem Aktivierungsdruck P_A beaufschlagbar ist.

Schließlich zeigt Fig. 1, dass bei eingelegtem Rückwärtsgang der die Rückstellfeder 31 aufnehmende Druckraum 71 des Selbsthalteventils 1 mit einem Rückwärtsgang-Verhinderungsdruck P_RV beaufschlagbar ist, wodurch bei einem Wegfall des Vorsteuerdrucks P_VST der Steuerschieber 30 durch die Kraft der Feder 31 und des Drucks P_RV soweit axialverschoben wird, dass der Druckraum 39 verschlossen sowie die Druckbeaufschlagung des Steuerkolbens 21 mit dem drehzahlabhängigen Steuerdruck P_D unterbunden wird. Bei gleichen Durchmessern der Steuerkolben 20 und 21 ist der Rückwärtsgang-Verhinderungsdruck P_RV dabei größer als der drehzahlabhängige Steuerdruck P_D zu wählen.

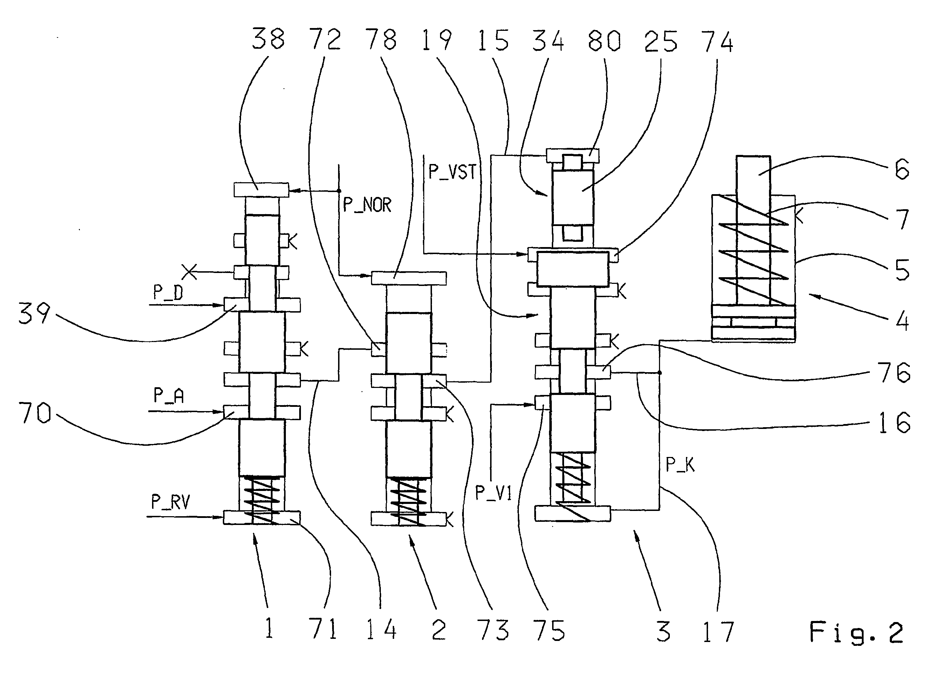

Die in Fig. 2 gezeigte Steuerungsventilanordnung unterschiedet sich von dem gerade erläuterten Ausführungsbeispiel vor allem dadurch, dass im Normalbetrieb der Vorsteuerdruck P_VST ausschließlich auf das Kupplungsregelventil 3 geleitet wird, während der Druckraum 38 des Selbsthalteventils 1 und der Druckraum 78 des Aktivierungsventils 2 von einem den Normalbetrieb kennzeichnenden Steuerdruck P_NOR beaufschlagt werden.

Dieser letztgenannte Druck P_NOR wird bei Wegfall oder starker Reduzierung des Vorsteuerdrucks P_VST zur Realisierung des beschriebenen Notfallbetriebs des Getriebes ebenfalls weggeschaltet, so dass dann, wenn der drehzahlabhängige Steuerdruck P_D oberhalb des genannten Druckgrenzwertes liegt, der Aktivierungsdruck P_A über das Selbsthalteventil 1, die Leitung 14, die Druckräume 72 und 73 des Aktivierungsventils 2 und die Leitung 15 an die rückstellfederferne Stirnseite des Steuerkolbens 25 des kürzeren Steuerschiebers 34 des Kupplungsregelventils 3 weiterleitbar ist.

Dadurch kann, wie schon im Zusammenhang mit Fig. 1 beschrieben wurde, der Steuerschieber 34 axial auf den Steuerschieber 19 einwirken, in deren Folge der Versorgungsdruck P_V1 über die Druckräume 75 und 76 sowie über die Leitung 16 an den Zylinder 5 der Kupplungsbetätigungsvorrichtung 4 weiterleitbar ist. Auf diese Weise wird die durch die Kupplungsbetätigungsvorrichtung 4 betätigbare Kupplung auch bei einem Wegfall oder starken Abfall des Vorsteuerdrucks P_VST geschlossen gehalten, so dass im Notbetrieb des Getriebes ein Fahrzeugvortrieb stattfinden kann.

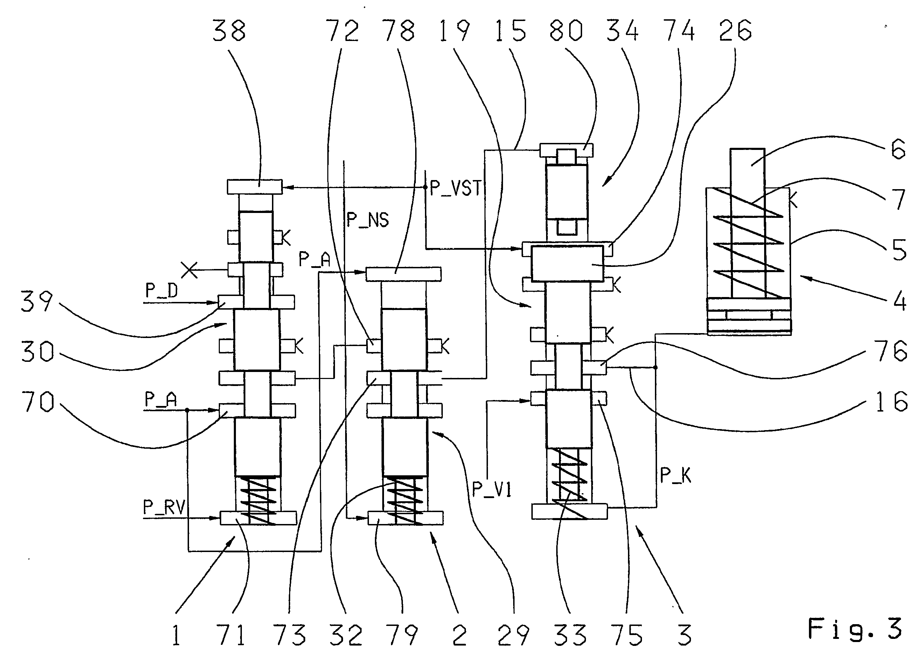

Das Ausführungsbeispiel der in Fig. 3 dargestellten Steuerungsventilanordnung unterschiedet sich nur vergleichsweise wenig von den in Fig. 1 und Fig. 2 gezeigten Varianten. So wird hier der Vorsteuerdruck P_VST in den Druckraum 38 des Selbsthalteventils 1 sowie in den Druckraum 74 des Regelventils 3 geleitet. Zudem wird der Aktivierungsdruck P_A nicht nur dem Druckraum 70 am Selbsthalteventil 1, sondern auch noch dem rückstellfederfernen Druckraum 78 am Aktivierungsventil 2 zugeleitet. Schließlich ist einem auch die Rückstellfeder 32 aufnehmenden Druckraum 79 des Aktivierungsventils 2 zur Realisierung eines Notbetriebs ein diesen Notbetriebsfall kennzeichnender Steuerdruck P_NS zuführbar.

Sofern durch eine Betriebsstörung der Vorsteuerdruck P_VST wegfällt oder stark abgesenkt wird, kann zwar bei ausreichend hoher Motor- bzw. Getriebeausgangsdrehzahl durch den drehzahlabhängigen Steuerdruck P_D der Steuerschieber 30 des Selbsthalteventils 1 in der in Fig. 3 gezeigten Position gehalten werden. Der auch im Druckraum 78 des Aktivierungsventils 2 wirkende Aktivierungsdruck P_A bewirkt aber, dass dessen Steuerschieber 29 ebenfalls in der dargestellten Position verharrt. Erst dann, wenn ein den Notbetrieb kennzeichnender Steuerdruck P_NS in dem Druckraum 79 des Aktivierungsventils 2 wirksam ist, wird der Steuerschieber 29 in Richtung zum Druckraum 78 verschoben, so dass der Druckraum 72 mit dem Druckraum 73 verbunden wird.

Dadurch gelangt dann der Aktivierungsdruck P_A von dem Druckraum 73 über die Leitung 15 zu dem Druckraum 80 des Kupplungsregelventils 3, so dass der axial kurze Steuerschieber 34 derart auf den Steuerkolben 26 des langen Steuerschiebers 19 einwirkt, dass letzterer gegen die Kraft der Rückstellfeder 33 axial verschoben wird und den Druckraum 75 mit dem Druckraum 76 verbindet. Nun kann in bereits beschriebener Weise Kupplungsbetätigungsdruck P_K über die Leitung 16 zu dem Zylinder 5 der Kupplungsbetätigungsvorrichtung 4 geleitet werden, in deren Folge diese in ihrer Schließstellung verharrt, bis der drehzahlabhängige Steuerdruck P_D den genannten Druckgrenzwert unterschreitet.

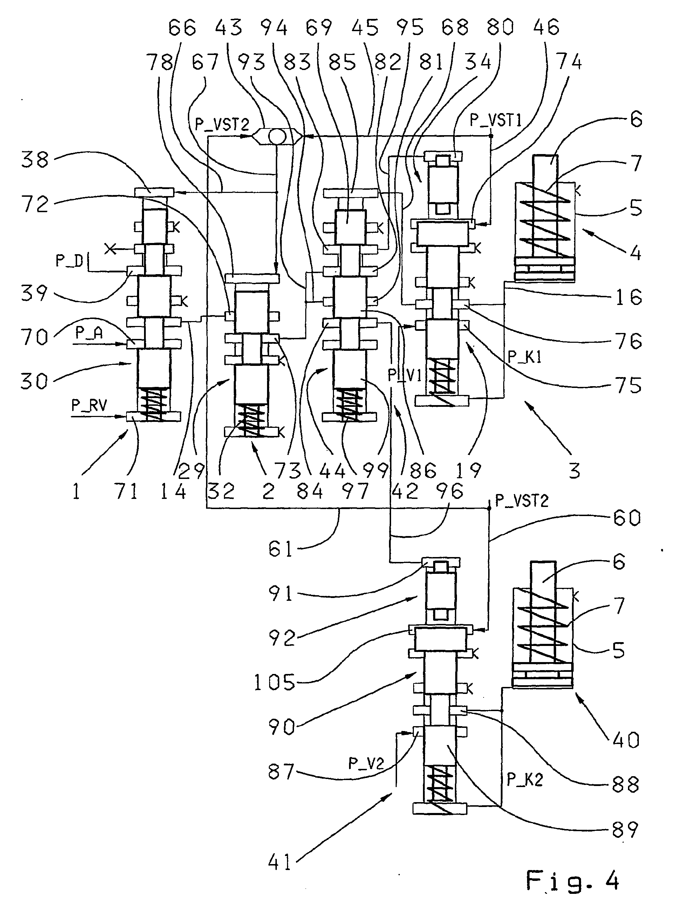

Bei der in Fig. 4 dargestellten Variante einer erfindungsgemäß ausgebildeten Steuerungsventilanordnung sind insgesamt zwei für einen Notbetrieb des Getriebes nutzbare Kupplungsbetätigungsvorrichtung 4 und 40 für zwei Anfahrkupplungen beispielsweise eines Doppelkupplungsgetriebes vorgesehen, wobei die erste Kupplungsbetätigungsvorrichtung 4 gegenüber der zweiten Kupplungsbetätigungsvorrichtung 40 im Notbetrieb bevorzugt in ihrer Schließstellung gehalten wird.

Auch diese Steuerungsventilanordnung verfügt über ein Selbsthalteventil 1 und ein Aktivierungsventil 2, die über ein Selektionsventil 42 hinsichtlich der Weitergabe des bereits mehrfach genannten Aktivierungsdrucks P_A alternativ zueinander drucktechnisch mit einem ersten Kupplungsbetätigungsventil 3 oder einem zweiten Kupplungsbetätigungsventil 41 verbindbar sind.

Besonders zu beachten ist hinsichtlich der Funktionsfähigkeit dieser Steuerungsventilanordnung auch ein Wechselventil 43, welches über die Leitung 45 bzw. über die Leitung 61 mit zwei Vorsteuerdrücken P_VST1 bzw. P_VST2 beaufschlagbar ist, die auch über den Leitungen 46 bzw. 60 den Druckräumen 74 bzw. 105 den langen Steuerschieber 19 bzw. 90 der beiden Kupplungsregelventile 3 und 41 zuleitbar sind. Der jeweils aktuell gerade größere Vorsteuerdruck P_VST1 oder P_VST2 wirkt im Normalbetrieb des Getriebes über die Leitungen 66 und 67 auf den Druckraum 38 des Selbsthalteventils 1 und auf den Druckraum 78 des Aktivierungsventils 2.

Des Weiteren verdeutlicht Fig. 4, dass der Aktivierungsdruck P_A von dem Selbsthalteventil 1 über das Aktivierungsventil 2 sowie über zwei Leitungen 93 und 94 an Druckräume 81 und 82 des Sektionsventils 42 weiterleitbar ist. In Abhängigkeit von der Selektionsstellung des Steuerschiebers 44 des Selektionsventils 42 ist dieser Aktivierungsdruck P_A in einer ersten Betriebsstellung über den Druckraum 82 und einen Druckraum 83 am Selektionsventil 42 mittels einer Leitung 95 zu dem Druckraum 80 an der federfernen Stirnseite des kurzen Steuerschiebers 34 des ersten Kupplungsbetätigungsventils 3 leitbar. In einer zweiten Betriebsstellung des Selektionsventils 42 wird der Aktivierungsdruck P_A über den Druckraum 81 und einen Druckraum 84 sowie mittels einer Leitung 96 an einen Druckraum 91 weitergegeben, welcher sich im Bereich der federfernen Stirnseite des kurzen Steuerschiebers 92 am zweiten Kupplungsregelventil 41 befindet.

Schließlich sind es konstruktive Merkmale der Steuerungsventilanordnung gemäß Fig. 4, dass der Steuerschieber 44 des Selektionsventils 42 an einer seiner Enden von einer Rückstellfeder 97 mit einer Rückstellkraft beaufschlagbar ist, und dass das gegenüberliegende freie Ende dieses Steuerschiebers 44 von dem geregelten Kupplungsbetätigungsdruck P_K1 des ersten Kupplungsregelventils 3 beaufschlagbar ist, welcher von dem Druckraum 76 am ersten Kupplungsregelventil 3 über eine Leitung 68 zu einem Druckraum 85 am Selektionsventil 42 leitbar ist.

Durch diesen Aufbau der Steuerungsventilanordnung gemäß Fig. 4 ist folgende Betriebsweise möglich:
Im Normalbetrieb des Getriebes wirkt zumindest einer der beiden Vorsteuerdrücke P_VST1 oder P_VST2 über das Wechselventil 43 auf die Druckräume 38 und 78 des Selektionsventils 1 und des Aktivierungsventils 2. Dadurch wird der Steuerschieber 29 des Aktivierungsventils 2 so positioniert, dass ein vom Selbsthalteventil 1 über die Leitung 14 zugeführter Aktivierungsdruck P_A nicht an das Selektionsventil 42 weitergeleitet wird. Zudem wird wenigstens eine der beiden Kupplungsbetätigungsvorrichtungen 4 oder 40 durch die genannten Vorsteuerdrücke P_VST1 bzw. P_VST2 in Schließrichtung betätigt.

Sofern beide Vorsteuerdrücke P_VST1 bzw. P_VST2 wegfallen oder zumindest stark abfallen, wird der Steuerschieber 29 am Aktivierungsventil 2 von der zugeordneten Rückstellfeder 32 soweit in Richtung zum Druckraum 78 verschoben, dass die beiden Druckräume 72 und 73 am Aktivierungsventil 2 drucktechnisch miteinander verbunden sind.

Sofern der auf den Druckraum 39 am Selbsthalteventil 1 wirkende drehzahlabhängige Steuerdruck P_D hoch genug ist, wird der Steuerschieber 30 in der in Fig. 4 gezeigten Position gehalten, so dass der Aktivierungsdruck P_A von dem Selbsthalteventil 1 über die Leitung 14 und die Druckräume 72 sowie 73 am Aktivierungsventil 2 zu dem Selektionsventil 42 leitbar ist. Der Aktivierungsdruck P_A gelangt so in den Druckraum 81 des Sektionsventils 42.

Da bei einem Wegfall des Vorsteuerdrucks P_VST1 auf das erste Kupplungsregelventil 3 der Steuerschieber 44 des Selektionsventils 42 wegen der Zuleitung des noch anliegenden Kupplungsbetätigungsdrucks P_K1 vom Druckraum 76 des ersten Kupplungsregelventils 3 über die Leitung 68 zu dem Druckraum 85 am Selektionsventil 42 in der in Fig. 4 gezeigten Stellung steht, ist in dieser Notbetriebssituation ein Weg für den Aktivierungsdruck P_A von dem Druckraum 73 des Aktivierungsventils 2 über die Leitung 93, den Druckraum 82 und den Druckraum 83 sowie über die Leitung 95 zu dem Druckraum 80 am kurzen Steuerschieber 34 des ersten Kupplungsregelventils 3 frei.

Dadurch kann dieser kurze Steuerschieber 34 in der bereits geschilderten Weise auf den langen Steuerschieber 19 des ersten Kupplungsregelventils 3 eine Axialkraft ausüben, die diesen trotz Wegfalls der Vorsteuerdrucks P_VST1 in einer den Druckraum 75 öffnenden Position hält. Auf diese Weise kann der Versorgungsdruck P_V1 über die Druckräume 75 und 76 sowie die Leitung 16 auf den Zylinder 5 der ersten Kupplungsbetätigungsvorrichtung 4 geleitet und diese in Schließstellung gehalten werden.

Durch eine zielgerechte Anpassung des Durchmessers des rückstellfederfernen Steuerkolbens 69 des Selektionsventils 42 sowie der Rückstellkraft dessen Rückstellfeder 97 kann diese Steuerungsventilanordnung gemäß Fig. 4 auch derart wirksam ausgebildet sein, dass bei einem Ausfall der beiden Vorsteuerdrücke P_VST1 und P_VST2 der mittlere Steuerkolben 86 des Steuerschiebers 44 des Selektionsventils 42 in seiner zweiten Schaltposition steht.

In dieser zweiten Schaltposition wird der Aktivierungsdruck P_A von dem Druckraum 73 des Aktivierungsventils 2 über die Leitung 94 zum Druckraum 81 des Selektionsventils 42, und von dort über den Druckraum 84 und die Leitung 96 zum Druckraum 91 des zweiten Kupplungsregelventils 41 geleitet. Dort wirkt in schon erläuterter Weise der kurze Steuerschieber 92 auf den langen Steuerschieber 90 derart, dass dessen rückstellfederbelasteter Steuerkolben 89 die Verbindung zwischen den beiden Druckräumen 87 und 88 freigibt. Dadurch wird der Versorgungsdruck P_V2 auf den Zylinder 5 der zweiten Kupplungsbetätigungsvorrichtung 40 geleitet, wodurch diese trotz Wegfalls des Vorsteuerdrucks P_VST2 solange in seiner Schließstellung gehalten wird, bis der drehzahlabhängige Steuerdruck P_D am Druckraum 39 des Selbsthalteventils 1 unter den vorgegebenen Grenzwert abgefallen ist.

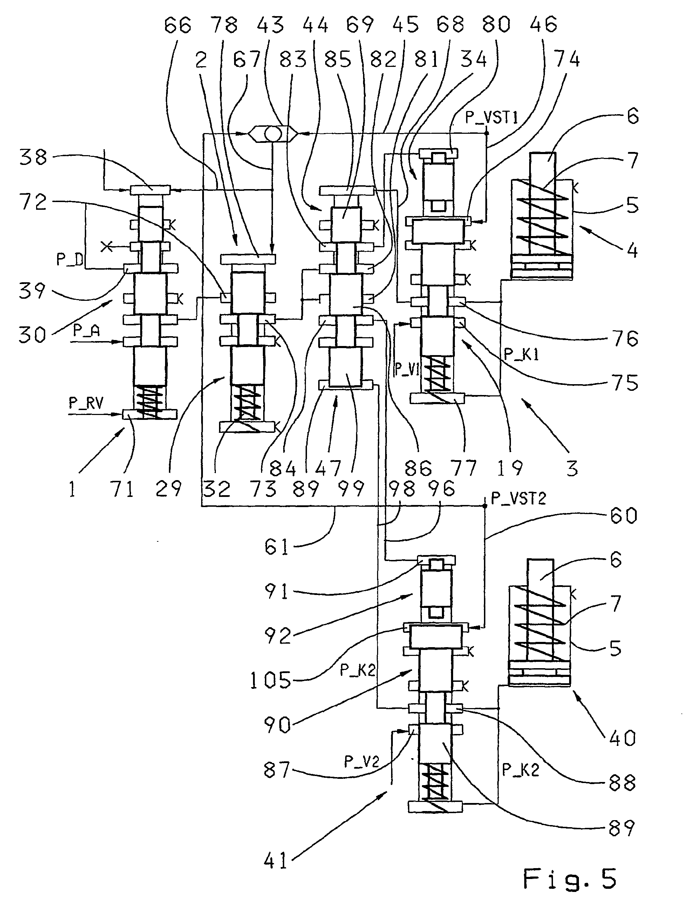

Fig. 5 zeigt eine weitere Variante der erfindungsgemäßen Steuerungsventilanordnung, mittels der diejenige von zwei Kupplungsbetätigungsvorrichtungen 4 und 40 während einer Notbetriebsphase in ihrer Schließstellung gehalten wird, welche zuletzt in dieser Schließstellung betätigt war.

Im Unterschied zur Steuerungsventilanordnung gemäß Fig. 4 ist hier zunächst vorgesehen, dass das Selektionsventil 47 über keine Rückstellfeder verfügt. Zudem sind bei diesem Selektionsventil 47 die beiden Steuerkolben 69 und 99 an den axialen Enden des Steuerschiebers 44 von einem Steuerdruck P_K1 bzw. P_K2 beaufschlagbar. Abweichend von der Steuerungsventilanordnung gemäß Fig. 4 wird hier der geregelte Kupplungsbetätigungsdruck P_K2 des zweiten Kupplungsregelventils 41 von dessen Druckraum 88 über eine Leitung 98 zu einem Druckraum 89 am stirnseitigen Ende des Steuerkolbens 99 des Selektionsventils 47 geführt.

Zur Aktivierung des Notbetriebs des Getriebes sind die Vorsteuerdrücke P_VST1 und P_VST2 weggefallen oder doch stark reduziert. Zudem wirkt der drehzahlabhängige Steuerdruck P_D auf den Druckraum 39 am Selbsthalteventil 1 mit einer Druckhöhe, die ausreicht, um den Steuerschieber 30 des Selbsthalteventils 1 in dem in Fig. 5 gezeigten Betätigungszustand zu halten.

Da beide Vorsteuerdrücke P_VST1 und P_VST2 nicht mehr oder zumindest nicht in ausreichender Höhe in dem Druckraum 78 des Aktivierungsventils 2 wirken, wird dessen Steuerschieber 29 durch die Kraft der Feder 32 in Richtung zum Druckraum 78 verschoben, so dass die Druckräume 72 und 73 des Aktivierungsventils 2 drucktechnisch miteinander verbunden sind. Dadurch wird der Aktivierungsdruck P_A über das Selbsthalteventil 1 und das Aktivierungsventil 2 zu den Druckräumen 81 und 82 des Selektionsventils 47 geleitet. Sofern die zuletzt in ihrer Schließstellung geschaltete Kupplungsbetätigungsvorrichtung die zweite Kupplungsbetätigungsvorrichtung 40 war, so bewirkte dies durch die Zuführung des Kupplungsbetätigungsdrucks P_K2 von dem Druckraum 88 des zweiten Kupplungsregelventils 41 über die Leitung 98 zu dem Druckraum 89 am Selektionsventil 47, dass der Steuerschieber 44 soweit in Richtung zum Druckraum 85 verschoben wurde, dass der Aktivierungsdruck P_A von dem Druckraum 81 über den Druckraum 84 des Selektionsventils 47 durch die Leitung 96 zu dem rückstellfederfernen Ende des kurzen Steuerkolbens 92 des zweiten Kupplungsregelventils 41 geleitet wird.

In deren Folge wirkt dieser kurze Steuerkolben 92 axial auf den langen Steuerkolben 90, wodurch dieser in einer Betätigungsstellung gehalten wird, in der der rückstellfederbeaufschlagte Steuerkolben 89 den Strömungsweg zwischen dem Druckraum 87 und dem Druckraum 88 freihält. Auf diese Weise kann aus dem Versorgungsdruck P_V2 der Kupplungsbetätigungsdruck P_K2 gebildet werden, der in diesem Notbetriebszustand die zuletzt in Geschlossen-Stellung befindliche Kupplungsbetätigungsvorrichtung 40 in dieser Betätigungsstellung hält. Dies geschieht wie auch bei den anderen Steuerungsventilanordnungen jedoch nur so lange, wie der drehzahlabhängige Steuerdruck P_D oberhalb des vorbestimmten Druckgrenzwertes liegt.

Einem Fachmann ist in Kenntnis des beschriebene Aufbaus sowie der genannten Funktionsweise schnell verständlich, dass dann, wenn im Gegensatz zu dem letztgenannten Beispiel die erste Kupplungsbetätigungsvorrichtung 4 zuletzt in der Geschlossen-Stellung betätigt war, diese bei einem Wegfall der Vorsteuerdrücke P_VST1 und P_VST2 zur Aufrechterhaltung eines Getriebenotbetriebs in der Geschlossen-Stellung gehalten wird.

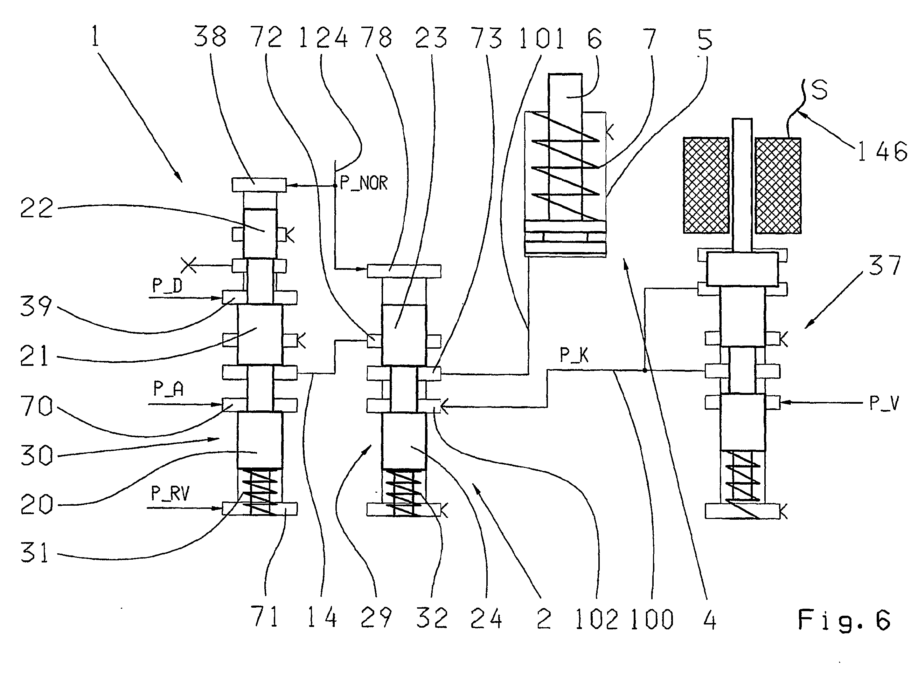

Fig. 6 verdeutlich an einer konstruktiv vergleichsweise einfach ausgebildete Steuerungsventilanordnung, dass die erzielbaren Vorteil nicht von der Bauweise des Kupplungsregelventils abhängen. In dem gezeigten Ausführungsbeispiel ist das Kupplungsregelventil nicht durch ein Druckmittel mit einem Vorsteuerdruck ansteuerbar. Vielmehr handelt es sich hierbei um ein elektromagnetisch betätigbares Kupplungsregelventil 37, welches in Abhängigkeit von einem über eine elektrische Leitung 146 zugeleiteten elektrischen Vorsteuersignal S einen proportionalen Kupplungsbetätigungsdruck P_K abgibt.

Zur Realisierung des gewünschten Funktionsverhaltens verfügt diese Steuerungsventilanordnung über ein Selbsthalteventil 1 und ein Aktivierungsventil 2 mit Steuerschiebern 29 bzw. 30, deren zu den Rückstellfedern 31, 32 fernen Stirnseiten im Normalbetrieb von einem den Normalbetrieb kennzeichnenden Steuerdruck P_NOR beaufschlagt werden. Dieser Steuerdruck P_NOR wird dabei über eine Steuerdruckleitung 124 den stirnseitigen Druckräumen 38 und 78 der beiden Ventile 1 und 2 zugeführt.

Darüber hinaus wirkt in der bereits vorgestellten Weise ein drehzahlabhängiger Steuerdruck P_D auf den mittleren Steuerkolben 21 des Selbsthalteventils 1, sowie bei anliegendem Steuerdruck P_NOR ein Aktivierungsdruck P_A in einem Druckraum 70 zwischen den beiden Steuerkolben 20 und 21.

Dieser Aktivierungsdruck P_A wird über die Leitung 14 dem Druckraum 72 am Aktivierungsventil 2 zugeleitet, der im Normalbetriebszustand durch den Steuerkolben 23 des Steuerschiebers 29 gegen eine Druckweiterleitung verschlossen ist. In diesem Zustand sind die beiden zwischen den beiden Steuerkolben 23 und 24 liegenden Druckräume 73 und 102 drucktechnisch miteinander verbunden, so dass ein von dem elektromagnetisch arbeitenden Kupplungsregelventil 37 aus einem Versorgungsdruck P_V erzeugter Kupplungsbetätigungsdruck P_K dem Zylinder 5 der Kupplungsbetätigungsvorrichtung 4 über die Leitungen 100 und 101 zuleitbar ist.

Sofern durch einen Defekt das elektromagnetische Regelventil 37 nicht mehr betätigbar ist, wird auch der den Normalbetrieb kennzeichnende Steuerdruck P_NOR weggeschaltet oder zumindest so stark reduziert, dass der Steuerschieber 29 des Aktivierungsventils 2 durch die Kraft der Feder 32 axial in Richtung des Druckraumes 78 verschoben wird. Sofern die Motor- bzw. Getriebeabtriebsdrehzahl über der Abwürgdrehzahl des Motors liegt, ist auch der drehzahlabhängige Steuerdruck P_D hoch genug, um am Selbsthalteventil 1 den Steuerschieber 30 trotz Wegfall des Drucks P_NOR im Druckraum 38 in der in Fig. 6 gezeigten Position zu halten.

Dadurch wird der Aktivierungsdruck P_A von dem Selbsthalteventil 1 über die Leitung 14, die Druckräume 72 und 73 des Aktivierungsventils 2 und die Druckmittelleitung 101 zur Kupplungsbetätigungsvorrichtung 4 geleitet. Auf diese Weise kann trotz Ausfall des Kupplungsregelventils 37 die Kupplungsbetätigungsvorrichtung 4 so lange in der Geschlossen-Stellung gehalten werden, wie der drehzahlabhängige Steuerdruck P_D oberhalb eines vorgegebenen und die Abwürgdrehzahl repräsentierenden Druckgrenzwertes liegt.

Da der Steuerkolben 24 des Steuerschiebers 29 des Aktivierungsventils 2 in dieser Notbetriebsphase den Druckraum 102 verschließt, kann auch kein Druckmittel über die Leitung 100 zu dem elektromagnetischen Regelventil 37 entweichen. Nur der Vollständigkeit halber wird darauf hingewiesen, dass dem Druckraum 71 des Selbsthalteventils 1 auch bei dieser Ausführungsform der Erfindung ein Rückwärtsgang-Verhinderungsdruck P_RV mit dem bereits geschilderten Effekt zugeführt werden kann.

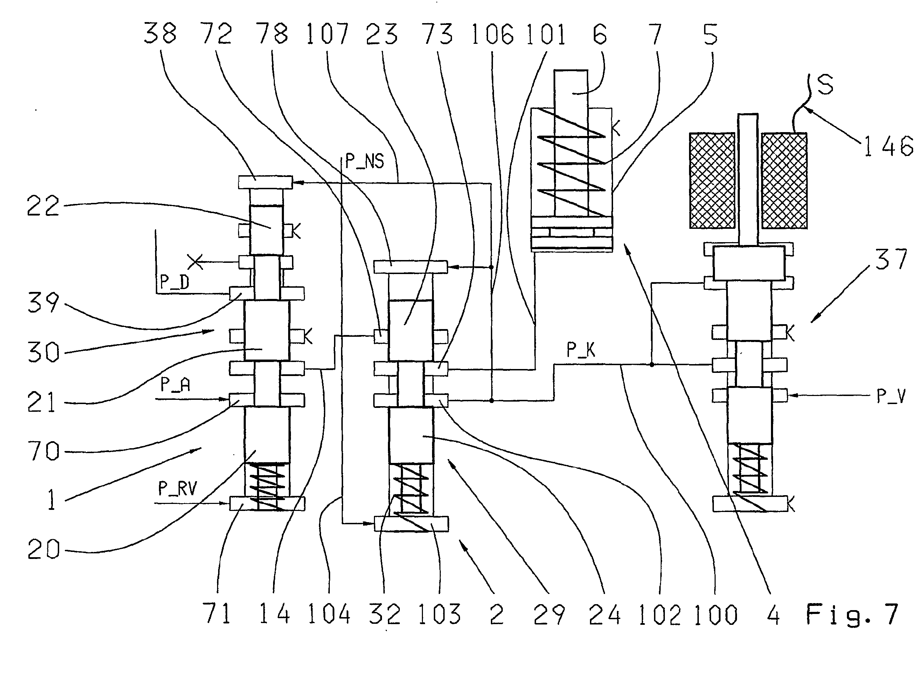

Fig. 7 zeigt eine geringfügig anders ausgebildete Variante, bei der im Unterschied zur Steuerungsventilanordnung gemäß Fig. 6 den Druckräumen 38 und 78 am Selbsthalteventil 1 bzw. am Aktivierungsventil 2 über die Leitungen 100 und 106 bzw. 107 der vom elektromagnetischen Kupplungsregelventil 37 erzeugte Kupplungsbetätigungsdruck P_K zuleitbar ist.

Zudem ist vorgesehen, dass der auch die Rückstellfeder 32 aufnehmende Druckraum 103 am Aktivierungsventil 2 über die Leitung 104 mit einem Steuerdruck P_NS beaufschlagbar ist, der den Notbetriebszustand kennzeichnet. Sofern bei dieser Steuerungsventilanordnung das elektromagnetische Kupplungsregelventil 37 ausfällt, verringert sich auch der bis dahin auf die Druckräume 38 und 78 sowie 102 und 73 wirkende Kupplungsbetätigungsdruck P_K.

Um nun das Aktivierungsventil 2 in seine Notbetriebsschaltstellung zu bringen, wird der rückstellfederseitige Druckraum 103 mit dem Steuerdruck P_NS beaufschlagt, wodurch der Steuerschieber 29 so weit in Richtung zum Druckraum 78 axialverschoben wird, dass die Druckräume 72 und 73 miteinander verbunden sind. Dadurch wird der Weg für den Aktivierungsdruck P_A frei, der nun ausgehend vom Druckraum 70 am Selbsthalteventil 1 bis zur Kupplungsbetätigungsvorrichtung 4 leitbar ist, und diese so lange in ihrer Geschlossen-Position halten kann, bis der drehzahlabhängige Steuerdruck P_D den vorbestimmten Druckgrenzwert unterschreitet.

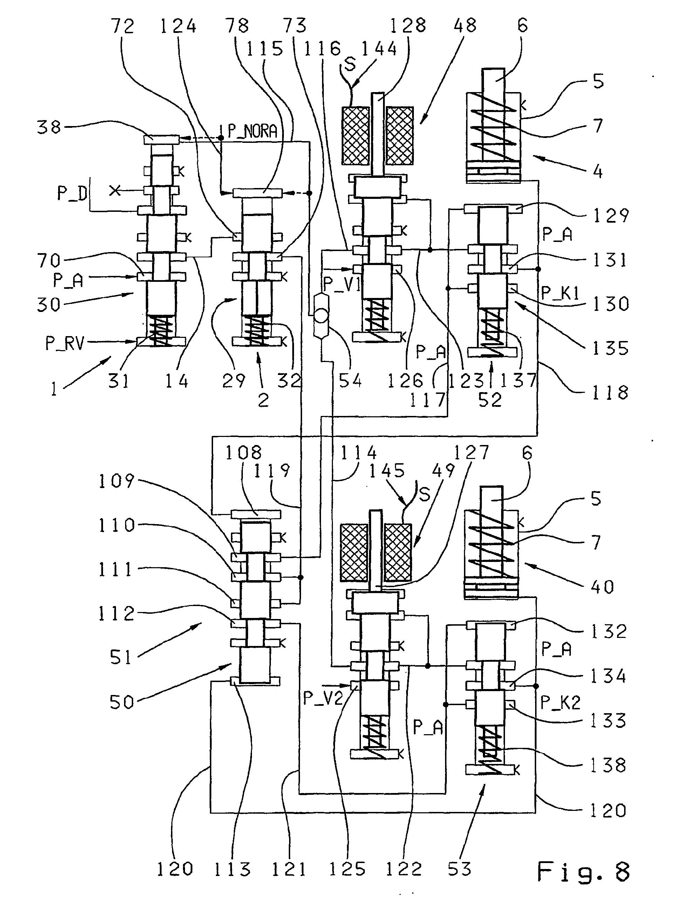

Das letzte nicht beanspruchte Ausführungsbeispiel Steuerungsventilsanordnung ist in Fig. 8 dargestellt. Bei dieser Steuerungsventilsanordnung sind zwei elektromagnetisch betätigbare Kupplungsregelventile 48 und 49 vorhanden, mit denen zwei Kupplungsbetätigungsvorrichtungen 4 und 40 für zwei nicht gezeigte Kupplungen betätigbar sind. Die zugehörigen Steuerventile sind dabei so aufgebaut und angeordnet, dass im Notbetrieb des Getriebes die zuletzt in Schließstellung befindliche Kupplungsbetätigungsvorrichtung 4 oder 40 so lange in ihrer Schließstellung gehalten wird, bis die Motor- oder Getriebeabtriebsdrehzahl unter die Abwürgdrehzahl fällt.

Zusätzlich zu den beiden Kupplungsregelventilen 48 und 49 verfügt auch diese Steuerungsventilsanordnung über ein Selbsthalteventil 1 und ein Aktivierungsventil 2, sowie über ein Selektionsventil 51 und zwei Umsteuerventile 52 und 53. Die steuerdrucktechnische Verschaltung dieser Steuerungsventilsanordnung wird zunächst durch eine Darstellung deren Normalbetriebsfunktion erläutert.

Im Normalbetrieb des Getriebes wirken auf die elektromagnetischen Kupplungsregelventile 48 oder 49 über die elektrischen Leitungen 144 bzw. 145 Steuersignale S von einem nicht dargestellten Getriebesteuergerät, durch welche die jeweiligen Proportionalmagnete die zugeordneten Steuerschieber 127 bzw. 128 federbelastet axial verschieben. Dadurch wird ein an den jeweiligen Druckräumen 125 bzw. 126 anliegender Versorgungsdruck P_V1 bzw. P_V2 zu Kupplungsbetätigungsdrücken P_K1 bzw. P_K2 umgewandelt.

Bei dem ersten elektromagnetischen Kupplungsregelventil 48 wird dieser Kupplungsbetätigungsdruck P_K1 über eine Druckleitung 123 auf das erste Umsteuerventil 52 geleitet, von dem dieser Druck in der dargestellten Schaltposition über eine Leitung 118 an den Zylinder 5 der ersten Kupplungsbetätigungsvorrichtung 4 weitergeleitet wird, so dass deren Kolben 6 beispielsweise in eine Schließstellung verschiebbar ist.

Darüber hinaus wird der Kupplungsbetätigungsdruck P_K1 über eine Leitung 116 zu einem Wechselventil 54 geleitet, von dem dieser auf die Druckräume 38 und/oder 78 des Selbsthalteventils 1 und/oder des Aktivierungsventils 2 leitbar ist.

Bei dem zweiten elektromagnetischen Kupplungsregelventil 49 wird dessen Kupplungsbetätigungsdruck P_K2 über eine Druckleitung 122 auf das zweite Umsteuerventil 53 geleitet, von dem dieser Druck in der dargestellten Schaltposition über eine Leitung 120 an den Zylinder 5 der zweiten Kupplungsbetätigungsvorrichtung 40 weitergeleitet wird, so dass deren Kolben 6 beispielsweise in eine Schließstellung verschiebbar ist.

Darüber hinaus wird der Kupplungsbetätigungsdruck P_K2 über eine Leitung 114 zu dem bereits genannten Wechselventil 54 geleitet, von dem dieser auf die Druckräume 38 und/oder 78 des Selbsthalteventils 1 und/oder des Aktivierungsventils 2 leitbar ist. Das Wechselventil 54 leitet an die Druckräume 38 und/oder 78 nur den jeweils höheren der beiden Kupplungsbetätigungsdrücke P_K1 oder P_K2 weiter.

Alternativ dazu ist auf die beiden genannten Druckräume 38 und/oder 78 ein Steuerdruck P_NORA über eine Leitung 124 zuführbar, welcher den Normalbetrieb des Getriebes kennzeichnet.

Im Normalbetrieb des Getriebes befinden sich das Selbsthalteventil 1 und das Aktivierungsventil 2 in der in Fig. 8 dargestellten Schaltstellung, so dass der Aktivierungsdruck P_A zwar über den Druckraum 70 des Selektionsventils 1 und die Leitung 14 zu dem Druckraum 72 des Aktivierungsventils 2 gelangen kann, dessen Weiterleitung ist jedoch durch die Stellung des Steuerschiebers 29 des Aktivierungsventils 2 versperrt. Daher können im Normalbetrieb die beiden Kupplungsbetätigungsvorrichtungen 4, 40 unbeeinflusst gleichzeitig oder alternativ zueinander betätigt werden.

Bei einer Störung beispielsweise des Getriebesteuergeräts sind auch die elektrisch angesteuerten Kupplungsregelventile 48 und 49 nicht aktivierbar. Daher verschließen die Steuerschieber 127 bzw. 128 dieser beiden Regelventile die Druckräume 125 bzw. 126, so dass kein Kupplungsregeldruck P_K1 bzw. P_K2 über das Wechselventil 54 zu den Druckräumen 38 und/oder 78 des Selbsthalteventils 1 sowie des Aktivierungsventils 2 gelangen kann.

Alternativ oder additiv dazu ist in einer solchen Notbetriebssituation der gegebenenfalls genutzte Steuerdruck P_NORA weggeschaltet oder zumindest stark abgesenkt, so dass der Steuerschieber 29 des Selektionsventils 2 getrieben durch die Kraft der Rückstellfeder 32 in Richtung zum Druckraum 78 verschoben ist. Dadurch, dass bei ausreichend hoher Motor- oder Getriebeabtriebsdrehzahl der drehzahlabhängige Steuerdruck P_D am Selbsthalteventil 1 dafür sorgt, dass dessen Steuerschieber 30 in der in Fig. 8 gezeigten Schaltposition stehen bleibt, gelangt der Aktivierungsdruck P_A über den Druckraum 70, die Leitung 14 und die nun miteinander verbundenen Druckräume 72 und 73 über eine Leitung 119 zu den Druckräumen 110 und 111 des Selektionsventils 51.

Sofern im Normalbetrieb zuletzt die Kupplungsbetätigungsvorrichtung 4 betätigt wurde, lag deren Kupplungsbetätigungsdruck P_K1, von dem ersten Kupplungsregelventil 48 kommend und über das erste Umsteuerventil 52 sowie die Leitung 118 an den Druckraum 108 des Selektionsventils 51 geleitet auch dort an, wobei der Druckraum 108 im Bereich einer der beiden Stirnseiten des Steuerschiebers 50 angeordnet ist.

Zwar ist auch der Kupplungsbetätigungsdruck P_K2 von dem zweiten Kupplungsregelventil 49 über das Umsteuerventil 53 und die Leitung 120 auf einen Druckraum 113 an der genau entgegengesetzten Stirnseite des Steuerschiebers 50 des Selektionsventils 51 leitbar, da in diesem Beispiel die Kupplungsbetätigungsanordnung 40 zuletzt nicht betätigt war, steht der Steuerschieber 50 jedoch in der in Fig. 8 dargestellten Schaltstellung.

In dieser Notbetriebsschaltstellung des Selektionsventils 51 wird der Aktivierungsdruck P_A ausgehend vom Druckraum 110 über den Druckraum 109 und die Leitung 117 zu den Druckräumen 129 und 130 des ersten Umsteuerventils 52 geleitet. Da der Druckraum 129 im Bereich der rückstellfederfernen Stirnseite des Steuerschiebers 135 angeordnet ist, verschiebt der bis hierhin geleitete Aktivierungsdruck P_A den Steuerschieber 135 gegen die Kraft der Rückstellfeder 137, so dass die Druckräume 130 und 131 am Umsteuerventil 52 miteinander verbunden werden. Dadurch gelangt der Aktivierungsdruck P_A in dieser Notbetriebssituation über die Leitung 118 zur ersten Kupplungsbetätigungsvorrichtung 4. Diese wird mit dem nun anliegenden Druck P_A so lange in ihrer Schließstellung gehalten, bis der drehzahlabhängige Steuerdruck P_D am Selbsthalteventil 1 unter den vorbestimmten Druckgrenzwert fällt.

Sofern das zweite Kupplungsbetätigungsventil 49 während des Normalbetriebs des Getriebes zuletzt aktiv war, wird in einer danach folgenden Notbetriebssituation der Steuerschieber 50 des Selektionsventils 51 wegen des bis dahin über die Leitung 120 auf den Druckraum 113 wirkenden Kupplungsbetätigungsdrucks P_K2 in einer Schaltstellung stehen, in der der Aktivierungdruck P_A von dem Druckraum 111 in den Druckraum 112 am Selektionsventil 51 übertreten kann. Über die Leitung 121 gelangt dieser Aktivierungsdruck P_A dann zu dem Druckraum 132 sowie zu dem Druckraum 133 des zweiten Umsteuerventils 53.

Dadurch, dass in der Notbetriebssituation kein Kupplungsbetätigungsdruck P_K2 am zweiten Umschaltventil 53 anliegt, wird der Steuerschieber 136 gegen die Kraft der Rückstellfeder 138 verschoben, so dass die Druckräume 133 und 134 des zweiten Umsteuerventils 53 miteinander verbunden werden. Auf diese Weise gelangt der Aktivierungsdruck P_A über die Leitung 120 zu dem Zylinder 5 der zweiten Kupplungsbetätigungsvorrichtung 40. Diese wird mit dem nun anliegenden Druck P_A so lange in ihrer Schließstellung gehalten, bis der drehzahlabhängige Steuerdruck P_D am Selbsthalteventil 1 unter den vorbestimmten Druckgrenzwert fällt.

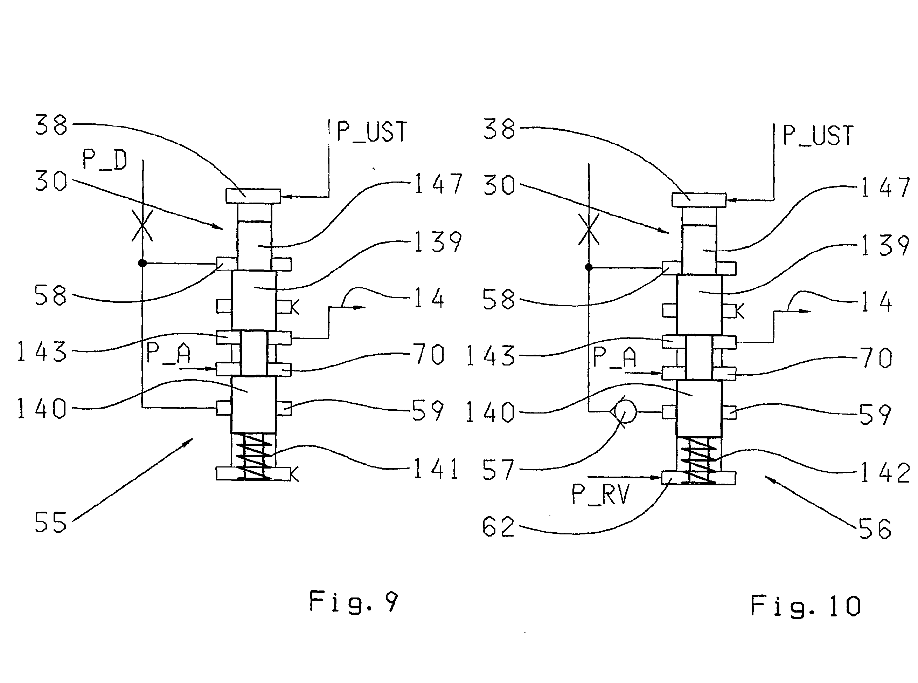

Schließlich wird anhand der Figuren 9 und 10 erläutert, dass das Selbsthalteventil 1 in weiteren Selbsthalteventilvarianten 55 und 56 ausführbar ist, bei denen drei Steuerkolben 139, 140 und 147 an dem Steuerschieber 30 angeordnet bzw. ausgebildet sind. Bei den beiden Varianten ist gleich, dass der Vorsteuerdruck P_VST oder ein anderer, den Normalbetrieb des Getriebes kennzeichnender Steuerdruck dem Druckraum 38 zugeleitet wird, der im Bereich des rückstellfederfernen Endes des Steuerschiebers 30 ausgebildet ist.

Außerdem wird der Aktivierungsdruck P_A den Selbsthalteventilen 55 bzw. 56 an einer Druckkammer 70 zugeführt sowie über eine Leitung 14 an das hier nicht dargestellte Aktivierungsventil 2 weitergeleitet. Dabei kann die Anbindung der Leitung 14 an dem Selbsthalteventil 55, 56 wie auch bei allen anderen in der Beschreibung und den Figuren dargestellten Beispielen über einen weiteren Druckraum 143 erfolgen, welcher an den Druckraum 70 angrenzt.

Bei Fig. 9 und Fig. 10 ist zudem vorgesehen, dass der drehzahlabhängige Steuerdruck P_D zwei Druckräumen 58 und 59 zuführbar ist, die derart angeordnet sind, dass je nach Schaltstellung der rücksteilfederferne Steuerkolben 139 oder der zur Rückstellfeder 141, 142 nahe Steuerkolben 140 mit diesem drehzahlabhängigen Steuerdruck P_D betätigungswirksam beaufschlagbar ist.

Bei Fig. 10 ist in Ergänzung der konstruktiven Merkmale des Selbsthalteventils 55 gemäß Fig. 9 bei dem Selbsthalteventil 56 zusätzlich vorgesehen, dass dem auch die Rückstellfeder 142 aufnehmenden Druckraum 62 der bereits erläuterte Rückschalt-Verhinderungsdruck P_RV zuführbar ist, und dass die Zuleitung des drehzahlabhängigen Steuerdrucks P_D zu dem Druckraum 59 über ein Rückschlagventil 57 erfolgt.

Durch die letztgenannte Maßnahme wird sichergestellt, dass der Rückschalt-Verhinderungsdruck P_RV nicht auf den Druckraum 58 wirken kann und so sichergestellt ist, dass bei eingelegtem Rückwärtsgang im Notbetrieb die bis dahin geschlossene Kupplung geöffnet und somit der Vortrieb des Fahrzeugs aus Sicherheitserwägungen unterbrochen wird.

Die bisher vorgestellten Steuerventilanordnungen sind zudem mit dem Vorteil verbunden, dass die Schmierung einer nassen Anfahrkupplung während des schlupfenden Normalbetriebs des Getriebes sichergestellt ist. Ein solcher Schlupfbetrieb ist aber dann beendet, wenn die Anfahrkupplung geschlossen ist. Dieser Zustand wird bei den vorgestellten Steuerventilanordnungen durch den Notbetrieb aufrechterhalten, so dass keine gesonderten Maßnahmen zur Kupplungsschmierung betroffen werden müssen.

In diesem Zusammenhang kann auch vorgesehen sein, dass der in der Beschreibung der Erfindung genannte Aktivierungsdruck P_A demjenigen Druckmittelstrom entnommen wird, der im Normalbetrieb für den Schlupfbetrieb der wenigstens einen Anfahrkupplung genutzt wird.

### Bezugszeichen

- 1: Selbsthalteventil
- 2: Aktivierungsventil
- 3: Kupplungsregelventil
- 4: Kupplungsbetätigungsvorrichtung
- 5: Zylinder
- 6: Kupplungskolben
- 7: Rückstellfeder
- 8: Leitung Vorsteuerdruck
- 9: Leitung Vorsteuerdruck
- 10: Leitung Vorsteuerdruck
- 11: Leitung drehzahlabhängiger Druck
- 12: Leitung zum Selbsthalteventil
- 13: Leitung Rückwärtsgang-Verhinderungsdruck
- 14: Verbindungsleitung Selbsthalteventil-Aktivierungsventil
- 15: Verbindungsleitung Aktivierungsventil-Kupplungsregelventil
- 16: Verbindungsleitung Kupplungsregelventil- Kupplungsbetätigungsvorrichtung
- 17: Verbindungsleitung Kupplungsregelventil- Kupplungsbetätigungsvorrichtung
- 18: Leitung Versorgungsdruck
- 19: Rückstellfederbelasteter Steuerschieber im Kupplungsregelventil
- 20: Steuerkolben am Steuerschieber im Selbsthalteventil
- 21: Steuerkolben am Steuerschieber im Selbsthalteventil
- 22: Steuerkolben am Steuerschieber im Selbsthalteventil
- 23: Steuerkolben am Steuerschieber im Aktivierungsventil
- 24: Steuerkolben am Steuerschieber im Aktivierungsventil
- 25: Steuerkolben am Steuerschieber im Kupplungsregelventil
- 26: Steuerkolben am Steuerschieber im Kupplungsregelventil
- 27: Steuerkolben am Steuerschieber im Kupplungsregelventil
- 28: Steuerkolben am Steuerschieber im Kupplungsregelventil
- 29: Steuerschieber im Aktivierungsventil
- 30: Steuerschieber im Selbsthalteventil
- 31: Rückstellfeder im Selbsthalteventil
- 32: Rückstellfeder im Aktivierungsventil
- 33: Rückstellfeder im Kupplungsregelventil
- 34: kurzer Steuerschieber im Kupplungsregelventil
- 35: Axialabschnitt am kurzen Steuerschieber des Kupplungsregelventils
- 36: Ventilbohrung des Selbsthalteventils
- 37: elektromagnetisch betätigbares Kupplungsregelventil
- 38: Druckraum am Selbsthalteventil
- 39: Druckraum am Selbsthalteventil
- 40: Kupplungsbetätigungsvorrichtung
- 41: Kupplungsregelventil
- 42: Selektionsventil
- 43: Wechselventil
- 44: Steuerschieber im Selektionsventil
- 45: Leitung P_VST1
- 46: Leitung P_VST1
- 47: Selektionsventil
- 48: elektromagnetisch betätigbares Kupplungsregelventil
- 49: elektromagnetisch betätigbares Kupplungsregelventil
- 50: Steuerschieber am Selektionsventil
- 51: Selektionsventil
- 52: Umsteuerventil
- 53: Umsteuerventil
- 54: Wechselventil
- 55: Selbsthalteventil
- 56: Selbsthalteventil
- 57: Rückschlagventil
- 58: Druckraum für drehzahlabhängigen Steuerdruck
- 59: Druckraum für drehzahlabhängigen Steuerdruck
- 60: Leitung PVST2
- 61: Leitung P_VST2
- 62: Druckraum Rückwärtsgang Verhinderungsdruck
- 63: Bohrung für Steuerschieber im Aktivierungsventil
- 64: Bohrung für langen Steuerschieber im Kupplungsregelventil
- 65: Bohrung für kurzen Steuerschieber im Kupplungsregelventil
- 66: Leitung Wechselventil - Selbsthalteventil
- 67: Leitung Wechselventil - Aktivierungsventil
- 68: Leitung Selektionsventil - Kupplungsregelventil
- 69: Steuerkolben am Selektionsventil
- 70: Druckraum am Selbsthalteventil
- 71: Druckraum am Selbsthalteventil
- 72: Druckraum am Aktivierungsventil
- 73: Druckraum am Aktivierungsventil
- 74: Druckraum am ersten Kupplungsregelventil
- 75: Druckraum am Kupplungsregelventil
- 76: Druckraum am Kupplungsregelventil
- 77: Druckraum am Kupplungsregelventil
- 78: Druckraum am Aktivierungsventil
- 79: Druckraum am Aktivierungsventil
- 80: Druckraum am Kupplungsregelventil
- 81: Druckraum am Selektionsventil
- 82: Druckraum am Selektionsventil
- 83: Druckraum am Selektionsventil
- 84: Druckraum am Selektionsventil
- 85: Druckraum am Selektionsventil
- 86: Steuerkolben am Selektionsventil
- 87: Druckraum am zweiten Kupplungsregelventil
- 88: Druckraum am zweiten Kupplungsregelventil
- 89: Druckraum am zweiten Kupplungsregelventil
- 90: langer Steuerschieber am zweiten Kupplungsregelventil
- 91: Druckraum am zweiten Kupplungsregelventil
- 92: kurzer Steuerschieber
- 93: Leitung
- 94: Leitung
- 95: Leitung
- 96: Leitung Selektionsventil - zweites Kupplungsregelventil
- 97: Rückstellfeder am Selektionsventil
- 98: Leitung Selektionsventil - zweites Kupplungsregelventil
- 99: Steuerkolben am Selektionsventil
- 100: Leitung
- 101: Leitung
- 102: Druckraum am Aktivierungsventil
- 103: Druckraum am Aktivierungsventil
- 104: Leitung für Druck P_NS
- 105: Druckraum am zweiten Kupplungsregelventil
- 106: Leitung
- 107: Leitung
- 108: Druckraum am Selektionsventil 51
- 109: Druckraum am Selektionsventil 51
- 110: Druckraum am Selektionsventil 51
- 111: Druckraum am Selektionsventil 51
- 112: Druckraum am Selektionsventil 51
- 113: Druckraum am Selektionsventil 51
- 114: Leitung
- 115: Leitung
- 116: Leitung
- 117: Leitung
- 118: Leitung
- 119: Leitung
- 120: Leitung
- 121: Leitung
- 122: Leitung
- 123: Leitung
- 124: Leitung
- 125: Druckraum am Kupplungsregelventil 49
- 126: Druckraum am Kupplungsregelventil 48
- 127: Steuerschieber am Kupplungsregelventil 49
- 128: Steuerschieber am Kupplungsregelventil 48
- 129: Druckraum am Umsteuerventil 52
- 130: Druckraum am Umsteuerventil 52
- 131: Druckraum am Umsteuerventil 52
- 132: Druckraum am Umsteuerventil 53
- 133: Druckraum am Umsteuerventil 53
- 134: Druckraum am Umsteuerventil 53
- 135: Steuerschieber am Umsteuerventil 52
- 136: Steuerschieber am Umsteuerventil 53
- 137: Rückstellfeder
- 138: Rückstellfeder
- 139: Steuerkolben
- 140: Steuerkolben
- 141: Rückstellfeder
- 142: Rückstellfeder
- 143: Druckraum am Selbsthalteventil
- 144: elektrische Steuerleitung
- 145: elektrische Steuerleitung
- 146: elektrische Steuerleitung
- 147: Steuerkolben

- P_A: Aktivierungsdruck
- P_D: drehzahlabhängiger Steuerdruck
- P_K: Kupplungsbetätigungsdruck
- P_K1: Kupplungsbetätigungsdruck
- P_K2: Kupplungsbetätigungsdruck
- P_NOR: Normalbetrieb kennzeichnender Steuerdruck
- P_NORA: Normalbetrieb kennzeichnender Steuerdruck
- P_NS: Notbetriebsteuerdruck
- P_RV: Rückwärtsgang-Verhinderungsdruck
- S: elektrisches Vorsteuersignal
- P_V1: Versorgungsdruck
- P_V2: Versorgungsdruck
- P_VST: Vorsteuerdruck
- P_VST1: Vorsteuerdruck
- P_VST2: Vorsteuerdruck

## Patentansprüche

1. Steuerungsventilanordnung zur Steuerung einer Anfahrkupplung eines Automatgetriebes, mit einem Kupplungsregelventil (3, 37, 41, 48, 49) zur Ansteuerung wenigstens einer Kupplungsbetätigungsvorrichtung (4, 40), welches im Normalbetrieb des Getriebes einen zugeleiteten Versorgungsdruck (P_V1, P_V2) in Abhängigkeit von einem Vorsteuerdruck (P_VST, P_VST1, P_VST2) oder von einem elektrischen Vorsteuersignal (S) in einen Kupplungsbetätigungsdruck (P_K, P_K1, P_K2) zur Ansteuerung der Kupplungsbetätigungsvorrichtung (4, 40) umwandelt, wobei zur Realisierung eines Notbetriebes des Getriebes bei Wegfall des Vorsteuerdrucks (P_VST, P_VST1, P_VST2) motordrehzahl-und/oder getriebeeingangsdrehzahl- und/oder getriebeabtriebsdrehzahl- und/oder motormoment- und/oder getriebeeingangsmoment- und/oder getriebeabtriebsmoment- und/oder fahrleistungsabhängig ein Aktivierungsdruck (P_A) auf das Kupplungsregelventil (3, 37, 41, 48, 49) oder direkt auf die Kupplungsbetätigungsvorrichtung (4, 40) leitbar ist, wodurch diese Kupplungsbetätigungsvorrichtung (4, 40) so lange in Schließstellung gehalten wird, wie die Drehzahl oberhalb eines vorbestimmten Drehzahlgrenzwertes liegt, **dadurch gekennzeichnet, dass** das vorsteuerdruckgeregelte Kupplungsregelventil (3, 41) zwei axial hintereinander angeordnete Steuerschieber aufweist, von denen ein kurzer Steuerschieber (34, 92) an seinen gegenüberliegenden Stirnseiten von dem Aktivierungsdruck (P_A) bzw. von dem Vorsteuerdruck (P_VST, P_VST1, P_VST2) beaufschlagbar ist, während auf eine rückstellfederferne axiale Stirnseite des längeren Steuerschiebers (19, 90) der Vorsteuerdruck (P_VST, P_VST1, P_VST2) leitbar ist.

2. Steuerungsventilanordnung nach Anspruch 1, **dadurch gekennzeichnet, dass** der Aktivierungsdruck (P_A) von einem Selbsthalteventil (1) über ein Aktivierungsventil (2) zum Kupplungsregelventil (3, 37, 41, 48, 49) oder direkt auf die Kupplungsbetätigungsvorrichtung (4, 40) leitbar ist, wenn ein drehzahlabhängiger Steuerdruck (P_D) am Selbsthalteventil (1) oberhalb eines Druckgrenzwertes liegt.

3. Steuerungsventilanordnung nach Anspruch 2, **dadurch gekennzeichnet, dass** der Druckgrenzwert diejenige Motordrehzahl kennzeichnet, unter der der Motor abgewürgt wird.

4. Steuerungsventilanordnung nach wenigstens einem der Ansprüche 1 bis 3, **dadurch gekennzeichnet, dass** der Vorsteuerdruck (P_VST, P_VST1, P_VST2) im Normalbetrieb auf das Selbsthalteventil (1) und das Aktivierungsventil (2) wirken.

5. Steuerungsventilanordnung nach wenigstens einem der vorherigen Ansprüche, **dadurch gekennzeichnet, dass** auf das Selbsthalteventil (1) und das Aktivierungsventil (2) im Normalbetrieb ein den Normalbetrieb kennzeichnender Steuerdruck (P_NOR) wirkt.

6. Steuerungsventilanordnung nach wenigstens einem der vorherigen Ansprüche, **dadurch gekennzeichnet, dass** auf das Aktivierungsventil (2) im Notbetrieb ein den Notbetrieb kennzeichnender Steuerdruck (P_NS) wirkt.

7. Steuerungsventilanordnung nach wenigstens einem der vorherigen Ansprüche, **dadurch gekennzeichnet, dass** der Steuerschieber (29) des Aktivierungsventils (2) von dem Aktivierungsdruck (P_A) und dem Vorsteuerdruck (P_VST) beaufschlagbar ist.

8. Steuerungsventilanordnung nach wenigstens einem der vorherigen Ansprüche, **dadurch gekennzeichnet, dass** der Steuerschieber (30) des Selbsthalteventils (1) von dem Aktivierungsdruck (P_A) und dem Vorsteuerdruck (P_VST) beaufschlagbar ist.

9. Steuerungsventilanordnung nach wenigstens einem der vorherigen Ansprüche, **dadurch gekennzeichnet, dass** die Steuerschieber (29, 30) des Selbsthalteventils (1) und des Aktivierungsventils (2) an einem axialen Ende jeweils einen Steuerkolben (20, 24) aufweisen, an denen sich jeweils eine Rückstellfeder (31, 32) abstützt, während auf einen Steuerkolben (22, 23) am jeweils anderen axialen Ende der Vorsteuerdruck (P_VST) einwirken kann.

10. Steuerungsventilanordnung nach wenigstens einem der vorherigen Ansprüche, **dadurch gekennzeichnet, dass** die axial aufeinander zu weisenden Stirnseiten der beiden Steuerschieber (19, 34) im vorsteuerdruckgeregelten Kupplungsregelventil (3, 41) mit dem Vorsteuerdruck (P_VST) beaufschlagbar sind.

11. Steuerungsventilanordnung nach wenigstens einem der vorherigen Ansprüche, **dadurch gekennzeichnet, dass** das von der mit dem Vorsteuerdruck beaufschlagbaren Stirnseite wegweisende Ende des axial längeren Steuerschiebers (19) des Kupplungsregelventils (3, 41) von einer Rückstellfeder (33) mit einer Rückstellkraft beaufschlagbar ist.

12. Steuerungsventilanordnung nach wenigstens einem der vorherigen Ansprüche, **dadurch gekennzeichnet, dass** sich die Rückstellfeder (33) an einem Kolben (28) des längeren Steuerschiebers (19) des Kupplungsregelventils (3, 41) abstützt, dessen beiden Stirnseiten von einem Kupplungsbetätigungsdruck (P_K, P_K1, P_K2) beaufschlagbar sind.

13. Steuerungsventilanordnung nach wenigstens einem der vorherigen Ansprüche, **dadurch gekennzeichnet, dass** die Kupplungsbetätigungsvorrichtung (4, 40) einen in einem Zylinder (5) führbaren Kolben (6) aufweist, der von einer den Kolben (6) koaxial umschließenden Rückstellfeder (7) mit einer in Kupplungsöffnungsrichtung wirkenden Rückstellkraft beaufschlagbar ist.

14. Steuerungsventilanordnung nach wenigstens einem der vorherigen Ansprüche, **dadurch gekennzeichnet, dass** der dem Kupplungsregelventil (3, 41) zuführbare Versorgungsdruck (P_V1, P_V2) das gleich Druckniveau aufweist wie der Aktivierungsdruck (P_A).

15. Steuerungsventilanordnung nach wenigstens einem der vorherigen Ansprüche, **dadurch gekennzeichnet, dass** der Vorsteuerdruck (P_VST) auf die rückstellfederferne Stirnseite des längeren Steuerschiebers (19) sowie auf die gegenüberliegende Stirnseite des kürzeren Steuerschiebers (34, 92) des Kupplungsregelventils (3, 41) leitbar ist,
und dass das Selbsthalteventil (1) sowie das Aktivierungsventil (2) an deren rückstellfederfernen Enden mit einem den Normalbetrieb kennzeichnenden Steuerdruck (P_NOR) beaufschlagbar ist,
wobei durch Wegfall dieses Steuerdrucks (P_NOR) zur Realisierung eines Getriebenotbetriebs der Aktivierungsdruck (P_A) auf das Kupplungsregelventil (3, 41) schaltbar ist,
durch den die Kupplungsbetätigungsvorrichtung (4, 40) nach Wegfall des Vorsteuerdrucks (P_VST) solange in ihrer Schließposition gehalten wird, bis der drehzahlabhängige Steuerdruck (P_D) am Selbsthalteventil (1) einen vorbestimmten Druckgrenzwert unterschreitet.

16. Steuerungsventilanordnung nach wenigstens einem der vorherigen Ansprüche, **dadurch gekennzeichnet, dass** der Vorsteuerdruck (P_VST) auf die rückstellfederfernen Stirnseiten des Steuerschiebers (30) des Selbsthalteventils (1) sowie des langen Steuerschiebers (19) des Kupplungsregelventils (3) leitbar ist,
dass das rückstellfederferne axiale Ende des Ventilschiebers (29) sowie ein Druckraum (72) des Aktivierungsventils (2) mit dem Aktivierungsdruck (P_A) beaufschlagbar ist,
dass auf die rückstellfederbelastete Stirnseite des Ventilschiebers (29) des Aktivierungsventils (2) zur Auslösung eines Notbetriebs des Getriebes ein Notbetriebsteuerdruck (P_NS) leitbar ist,
und dass nach Wegfall des Vorsteuerdrucks (P_VST) der Aktivierungsdruck (P_A) vom Aktivierungsventil (2) auf das Kupplungsregelventil (3) schaltbar ist,
durch den die Kupplungsbetätigungsvorrichtung (4) solange in ihrer Schließposition gehalten wird, bis der drehzahlabhängige Steuerdruck (P_D) am Selbsthalteventil (1) einen vorbestimmten Druckgrenzwert unterschreitet.

17. Steuerungsventilanordnung nach wenigstens einem der vorherigen Ansprüche, **dadurch gekennzeichnet,**
**dass** ein erster Vorsteuerdruck (P_VST1) der rückstellfederfernen Stirnseite eines federbelasteten Steuerschiebers (19) eines ersten Kupplungsregelventils (3) und ein zweiter Vorsteuerdruck (P_VST2) der rückstellfederfernen Stirnseite eines federbelasteten Steuerschiebers (90) eines zweiten Kupplungsregelventils (41) zuleitbar ist,
**dass** die beiden Kupplungsregelventile (3, 41) jeweils eine von zwei Kupplungsbetätigungsvorrichtungen (4, 40) mit jeweils einem Kupplungsbetätigungsdruck (P_K1, P_K2) beaufschlagen,
**dass** die beiden Vorsteuerdrücke (P_VST1, P_VST2) einem Wechselventil (43) zuleitbar sind, mittels dem die rückstellfederfernen Stirnseiten der Steuerschieber (29, 30) des Aktivierungsventils (2) und des Selbsthalteventils (1) wechselweise mit dem höheren der beiden Vorsteuerdrücke (P_VST1, P_VST2) beaufschlagbar sind,
**dass** bei Wegfall der beiden Vorsteuerdrücke (P_VST1, P_VST2) sowie bei Vorliegen eines drehzahlabhängigen Steuerdrucks (P_D) am Selbsthalteventil (1) der Aktivierungsdruck (P_A) von dem Selbsthalteventil (1) über das Aktivierungsventil (2) an ein Selektionsventil (42) weiterleitbar ist,
mittels dem in Abhängigkeit von dessen Schaltstellung der Aktivierungsdruck (P_A) an die rückstellfederferne Stirnseite des kurzen Steuerschiebers (34) des ersten Kupplungsregelventils (3) oder an die rückstellfederferne Stirnseite des kurzen Steuerschiebers (90) des zweiten Kupplungsregelventils (41) weiterleitbar ist,
wodurch die erste Kupplungsbetätigungsvorrichtung (4) so lange in ihrer Schließposition gehalten wird, bis der drehzahlabhängige Steuerdruck (P_D) am Selbsthalteventil (1) einen vorbestimmten Druckgrenzwert unterschreitet, während die zweite Kupplungsbetätigungsvorrichtung (41) in einer Geöffnet-Stellung gebracht oder gehalten wird.

18. Steuerungsventilanordnung nach Anspruch 17, **dadurch gekennzeichnet, dass** das rückstellfederferne Ende des Steuerschiebers (44) des Selektionsventils (42) mit dem geregelten Kupplungsbetätigungsdruck (P_K1) des ersten Kupplungsregelventils (3) beaufschlagbar ist,
so dass dann, wenn dieser geregelte Kupplungsbetätigungsdruck (P_K1) einen vorgegebenen Druckwert unterschreitet, der Steuerschieber (44) des Selektionsventils (42) axial in seine zweite Schaltstellung bringbar ist, in der zur Realisierung eines Notbetriebs der Aktivierungsdruck (P_A) von diesem Selektionsventil (42) an die rückstellfederferne Stirnseite des kurzen Steuerschiebers (92) des zweiten Kupplungsregelventils (41) weiterleitbar ist,
wodurch dieser auf die rückstellfederferne Stirnseite des federbelasteten Steuerschiebers (92) dieses Ventils (41) wirkend einen Versorgungsdruck (P_V2) als Kupplungsbetätigungsdruck (P_K2) zum notbetrieblichen Verstellen der zweiten Kupplungsbetätigungsvorrichtung (40) in Schließrichtung an dieselbe weiterleitet.

19. Steuerungsventilanordnung nach wenigstens einem der vorherigen Ansprüche, **dadurch gekennzeichnet,**
**dass** ein erster Vorsteuerdruck (P_VST1) der rückstellfederfernen Stirnseite eines federbelasteten Steuerschiebers (19) eines ersten Kupplungsregelventils (3) und ein zweiter Vorsteuerdruck (P_VST2) der rückstellfederfernen Stirnseite eines federbelasteten Steuerschiebers (90) eines zweiten Kupplungsregelventils (41) zuleitbar ist,
**dass** die beiden Kupplungsregelventile (3, 41) jeweils eine von zwei Kupplungsbetätigungsvorrichtungen (4, 40) mit jeweils einem Kupplungsbetätigungsdruck (P_K1, P_K2) beaufschlagen,
**dass** die beiden Vorsteuerdrücke (P_VST1, P_VST2) einem Wechselventil (43) zuleitbar sind, mittels dem die rückstellfederferne Stirnseite des Steuerschiebers (29) des Aktivierungsventils (2) wechselweise mit dem höheren der beiden Vorsteuerdrücke (P_VST1, P_VST2) beaufschlagbar ist,
**dass** ein drehzahlabhängiger Steuerdruck (P_D) dem Steuerschieber (30) des Selbsthalteventils (1) zuleitbar ist,
**dass** nach Wegfall der beiden Vorsteuerdrücke (P_VST1, P_VST2) sowie bei Vorliegen eines vorbestimmten drehzahlabhängigen Steuerdrucks (P_D) am Selbsthalteventil (1) der Aktivierungsdruck (P_A) von dem Selbsthalteventil (1) über das Aktivierungsventil (2) an ein rückstellfederloses Selektionsventil (47) weiterleitbar ist,
mittels dem in Abhängigkeit von dessen Schaltstellung der Aktivierungsdruck (P_A) an die rückstellfederferne Stirnseite des kurzen Steuerschiebers (34) des ersten Kupplungsregelventils (3) oder an die rückstellfederferne Stirnseite des kurzen Steuerschiebers (92) des zweiten Kupplungsregelventils (41) weiterleitbar ist,
**dass** ein stirnseitiges Ende des Steuerschiebers (44) im Selektionsventil (47) mit dem geregelten Kupplungsbetätigungsdruck (P_K1) des ersten Kupplungsregelventils (3) und sein anderes stirnseitiges Ende mit dem geregelten Kupplungsbetätigungsdruck (P_K2) des zweiten Kupplungsregelventils (41) beaufschlagbar ist,
so dass bei einem notfallbedingten Wegfall der Vorsteuerdrücke (P_VST1, P_VST2) die zuletzt in Schließstellung befindliche erste Kupplungsbetätigungsvorrichtung (4) bzw. zweite Kupplungsbetätigungsvorrichtung (41) solange in ihrer Schließposition gehalten wird, bis der drehzahlabhängige Steuerdruck (P_D) am Selbsthalteventil (1) den vorbestimmten Druckschwellwert unterschreitet.

20. Steuerungsventilanordnung nach wenigstens einem der vorherigen Ansprüche, durch **gekennzeichnet**, dass der Aktivierungsdruck (P_A) demjenigen Druckmittelstrom entnommen wird, der im Normalbetrieb für den Schlupfbetrieb der wenigstens einen Anfahrkupplung genutzt wird.

## Claims

1. Control valve arrangement for controlling a starting clutch of an automatic transmission, comprising a clutch control valve (3, 37, 41, 48, 49) for activating at least one clutch actuating device (4, 40), which clutch control valve (3, 37, 41, 48, 49), in normal operation of the transmission, converts a supply pressure (P_V1, P_V2) directed to it into a clutch actuation pressure (P_K, P_K1, P_K2) for activating the clutch actuating device (4, 40) as a function of a pilot pressure (P_VST, P_VST1, P_VST2) or of an electrical pilot signal (S), wherein, in order to implement an emergency operation of the transmission in the event of failure of the pilot pressure (P_VST, P_VST1, P_VST2), an activation pressure (P_A) can be directed to the clutch control valve (3, 37, 41, 48, 49) or directly to the clutch actuating device (4, 40) as a function of engine rotational speed and/or transmission input rotational speed and/or transmission output rotational speed and/or engine torque and/or transmission input torque and/or transmission output torque and/or vehicle performance, whereby said clutch actuating device (4, 40) is held in the closed position as long as the rotational speed is above a predetermined rotational speed limit value, **characterised in that** the pilot-pressure controlled clutch control valve (3, 41) has two control spools arranged axially one behind the other, of which a short control spool (34, 92) can be subjected on its respective opposite end faces to the activation pressure (P_A) and to the pilot pressure (P_VST, P_VST1, P_VST2), while the pilot pressure (P_VST, P_VST1, P_VST2) can be directed to an axial end face of the longer control spool (19, 90) which is remote from the return spring.

2. Control valve arrangement according to Claim 1, **characterised in that** the activation pressure (P_A) can be directed by a self-locking valve (1) via an activation valve (2) to the clutch control valve (3, 37, 41, 48, 49) or directly to the clutch actuating device (4, 40) if a rotational-speed dependent control pressure (P_D) at the self-locking valve (1) is above a pressure limit value.

3. Control valve arrangement according to Claim 2, **characterised in that** the pressure limit value characterises the engine rotational speed below which the engine is stalled.

4. Control valve arrangement according to at least one of Claims 1 to 3, **characterised in that** in normal operation the pilot pressure (P_VST, P_VST1, P_VST2) acts on the self-locking valve (1) and on the activation valve (2).

5. Control valve arrangement according to at least one of the preceding claims, **characterised in that** in normal operation a control pressure (P_NOR) which characterises normal operation acts on the self-locking valve (1) and on the activation valve (2).

6. Control valve arrangement according to at least one of the preceding claims, **characterised in that** in emergency operation a control pressure (P_NS) which characterises emergency operation acts on the activation valve (2).

7. Control valve arrangement according to at least one of the preceding claims, **characterised in that** the control spool (29) of the activation valve (2) can be subjected to the activation pressure (P_A) and to the pilot pressure (P_VST).

8. Control valve arrangement according to at least one of the preceding claims, **characterised in that** the control spool (30) of the self-locking valve (1) can be subjected to the activation pressure (P_A) and to the pilot pressure (P_VST).

9. Control valve arrangement according to at least one of the preceding claims, **characterised in that** the control spools (29, 30) of the self-locking valve (1) and of the activation valve (2) each have on an axial end a respective control piston (20, 24) against which a respective return spring (31, 32) bears, while the pilot pressure (P_VST) can act on a control piston (22, 23) at the respective other axial end.

10. Control valve arrangement according to at least one of the preceding claims, **characterised in that** the end faces oriented axially towards one another of the two control spools (19, 34) in the pilot-pressure controlled clutch control valve (3, 41) can be subjected to the pilot pressure (P_VST).

11. Control valve arrangement according to at least one of the preceding claims, **characterised in that** the end of the axially longer control spool (19) of the clutch control valve (3, 41), which end is oriented away from the end face which can be subjected to the pilot pressure, can be subjected to a restoring force by a return spring (33).

12. Control valve arrangement according to at least one of the preceding claims, **characterised in that** the return spring (33) bears against a piston (28) of the longer control spool (19) of the clutch control valve (3, 41), the two end faces of which can be subjected to a clutch actuation pressure (P_K, P_K1, P_K2).

13. Control valve arrangement according to at least one of the preceding claims, **characterised in that** the clutch actuating device (4, 40) has a piston (6) which can be guided in a cylinder (5) and which can be subjected by a return spring (7) coaxially surrounding the piston (6) to a restoring force acting in the clutch opening direction.

14. Control valve arrangement according to at least one of the preceding claims, **characterised in that** the supply pressure (P_V1, P_V2) which can be supplied to the clutch control valve (3, 41) has the same pressure level as the activation pressure (P_A).

15. Control valve arrangement according to at least one of the preceding claims, **characterised in that** the pilot pressure (P_VST) can be directed to the end face, remote from the return spring, of the longer control spool (19) and to the opposite end face of the shorter control spool (34, 92) of the clutch control valve (3, 41),
and **in that** the ends of the self-locking valve (1) and of the activation valve (2) remote from the return springs can be subjected to a control pressure (P_NOR) which characterises normal operation,
the activation pressure (P_A) being switchable to the clutch control valve (3, 41) by the failure of said control pressure (P_NOR) in order to implement an emergency operation of the transmission,
by which activation pressure (P_A) the clutch actuating device (4, 40) is held in its closed position after the failure of the pilot pressure (P_VST) until the rotational-speed dependent control pressure (P_D) at the self-locking valve (1) falls below a predetermined pressure limit value.

16. Control valve arrangement according to at least one of the preceding claims, **characterised in that** the pilot pressure (P_VST) can be directed to the end faces, remote from the return springs, of the control spool (30) of the self-locking valve (1) and of the long control spool (19) of the clutch control valve (3),
**in that** the axial end, remote from the return spring, of the valve spool (29) and a pressure chamber (72) of the activation valve (2) can be subjected to the activation pressure (P_A),
**in that** an emergency operation control pressure (P_NS) can be directed to the end face, loaded by the return spring, of the valve spool (29) of the activation valve (2) in order to trigger an emergency operation of the transmission,
and **in that**, after the failure of the pilot pressure (P_VST), the activation pressure (P_A) can be switched from the activation valve (2) to the clutch control valve (3),
by which activation pressure (P_A) the clutch actuating device (4) is held in its closed position until the rotational-speed dependent control pressure (P_D) at the self-locking valve (1) falls below a predetermined pressure limit value.

17. Control valve arrangement according to at least one of the preceding claims, **characterised in that**
a first pilot pressure (P_VST1) can be directed to the end face remote from the return spring of a spring-loaded control spool (19) of a first clutch control valve (3), and a second pilot pressure (P_VST2) can be directed to the end face remote from the return spring of a spring-loaded control spool (90) of a second clutch control valve (41), **in that** the two clutch control valves (3, 41) each subject a respective one of two clutch actuating devices (4, 40) to a respective clutch actuation pressure (P_K1, P_K2),
**in that** the two pilot pressures (P_VST1, P_VST2) can be directed to a shuttle valve (43) by means of which the end faces remote from the return springs of the control spools (29, 30) of the activation valve (2) and of the self-locking valve (1) can be subjected alternately to the higher of the two pilot pressures (P_VST1, P_VST2),
**in that**, upon failure of both pilot pressures (P_VST1, P_VST2) and when a rotational-speed dependent control pressure (P_D) is present at the self-locking valve (1), the activation pressure (P_A) can be directed by the self-locking valve (1) via the activation valve (2) to a selector valve (42),
by means of which, depending on the switching position thereof, the activation pressure (P_A) can be directed to the end face remote from the return spring of the short control spool (34) of the first clutch control valve (3) or to the end face remote from the return spring of the short control spool (90) of the second clutch control valve (41),
whereby the first clutch actuating device (4) is held in its closed position until the rotational-speed dependent control pressure (P_D) at the self-locking valve (1) falls below a predetermined pressure limit value, while the second clutch actuating device (40) is moved to or held in an open position.

18. Control valve arrangement according to Claim 17, **characterised in that** the end remote from the return spring of the control spool (44) of the selector valve (42) can be subjected to the regulated clutch actuation pressure (P_K1) of the first clutch control valve (3),
so that, when said regulated clutch actuation pressure (P_K1) falls below a predetermined pressure value, the control spool (44) of the selector valve (42) can be moved axially to its second switching position in which, in order to implement an emergency operation, the activation pressure (P_A) can be directed by this selector valve (42) to the end face remote from the return spring of the short control spool (92) of the second clutch control valve (41),
whereby said activation pressure (P_A), acting on the end face remote from the return spring of the spring-loaded control spool (92) of this valve (41), conducts a supply pressure (P_V2) as a clutch actuation pressure (P_K2) to the second clutch actuating device (40) in order to displace said second clutch actuating device (40) in the closing direction for emergency operation.

19. Control valve arrangement according to at least one of preceding claims, **characterised in that**
a first pilot pressure (P_VST1) can be directed to the end face remote from the return spring of a spring-loaded control spool (19) of a first clutch control valve (3), and a second pilot pressure (P_VST2) can be directed to the end face remote from the return spring of a spring-loaded control spool (90) of a second clutch control valve (41), **in that** the two clutch control valves (3, 41) each subject a respective one of two clutch actuating devices (4, 40) to a respective clutch actuation pressure (P_K1, P_K2),
**in that** the two pilot pressures (P_VST1, P_VST2) can be directed to a shuttle valve (43) by means of which the end face remote from the return spring of the control spool (29) of the activation valve (2) can be subjected alternately to the higher of the two pilot pressures (P_VST1, P_VST2),
**in that** a rotational-speed dependent control pressure (P_D) can be directed to the control spool (30) of the self-locking valve (1),
**in that**, after the failure of both pilot pressures (P_VST1, P_VST2) and when a predetermined rotational-speed dependent control pressure (P_D) is present at the self-locking valve (1), the activation pressure (P_A) can be directed by the self-locking valve (1) via the activation valve (2) to a selector valve (47) which is without a return spring,
by means of which selector valve (47), depending on the switching position thereof, the activation pressure (P_A) can be directed to the end face remote from the return spring of the short control spool (34) of the first clutch control valve (3) or to the end face remote from the return spring of the short control spool (92) of the second clutch control valve (41),
**in that** an end face of the control spool (44) in the selector valve (47) can be subjected to the regulated clutch actuation pressure (P_K1) of the first clutch control valve (3) and its other end face can be subjected to the regulated clutch actuation pressure (P_K2) of the second clutch control valve (41),
so that upon a failure, caused by an emergency, of the pilot pressures (P_VST1, P_VST2), the first clutch actuating device (4) or the second clutch actuating device (41), whichever is last in the closed position, is held in its closed position until the rotational-speed dependent control pressure (P_D) at the self-locking valve (1) falls below the predetermined pressure threshold value.

20. Control valve arrangement according to at least one of the preceding claims, **characterised in that** the activation pressure (P_A) is drawn from the pressure medium flow which in normal operation is used for the slip mode of the at least one starting clutch.

## Revendications

1. Agencement de soupape de commande pour la commande d'un embrayage de démarrage d'une boîte de vitesses automatique, comprenant une soupape de régulation d'embrayage (3, 37, 41, 48, 49) pour la commande d'au moins un dispositif de commande d'embrayage (4, 40), qui, en mode de fonctionnement normal de la boîte de vitesses, convertit une pression d'alimentation introduite (P_V1, P_V2) en fonction d'une pression pilote (P_VST, P_VST1, P_VST2) ou d'un signal électrique pilote (S) en une pression de commande d'embrayage (P_K, P_K1, P_K2) pour la commande du dispositif de commande d'embrayage (4, 40), une pression d'activation (P_A) pouvant être appliquée sur la soupape de régulation d'embrayage (3, 37, 41, 48, 49) ou directement sur le dispositif de commande d'embrayage (4, 40) en fonction du régime du moteur et/ou du régime d'entrée de la boîte de vitesses et/ou du régime de sortie de la boîte de vitesses et/ou du couple moteur et/ou du couple d'entrée de la boîte de vitesses et/ou du couple de sortie de la boîte de vitesses et/ou de la puissance de conduite, pour réaliser un mode de fonctionnement de secours de la boîte de vitesses en cas de défaillance de la pression pilote (P_VST, P_VST1, P_VST2), de sorte que ce dispositif de commande d'embrayage (4, 40) soit maintenu dans la position fermée tant que le régime se situe au-dessus d'une valeur limite de régime prédéterminée, **caractérisé en ce que** la soupape de régulation d'embrayage (3, 41) à régulation par pression pilote présente deux coulisseaux de commande disposés axialement l'un derrière l'autre, dont un coulisseau de commande plus court (34, 92) peut être sollicité sur ses côtés frontaux opposés par la pression d'activation (P_A) ou par la pression pilote (P_VST, P_VST1, P_VST2), tandis que la pression pilote (P_VST, P-VST1, P_VST2) peut être appliquée sur un côté frontal axial éloigné du ressort de rappel du coulisseau de commande plus long (19, 90).

2. Agencement de soupape de commande selon la revendication 1, **caractérisé en ce que** la pression d'activation (P_A) peut être appliquée par une soupape autorétentive (1) par le biais d'une soupape d'activation (2) à la soupape de régulation d'embrayage (3, 37, 41, 48, 49) ou directement sur le dispositif de commande d'embrayage (4, 40), lorsqu'une pression de commande (P_D) dépendant du régime appliquée à la soupape autorétentive (1) est au-dessus d'une valeur limite de pression.

3. Agencement de soupape de commande selon la revendication 2, **caractérisé en ce que** la valeur limite de pression caractérise le régime moteur en dessous duquel le moteur cale.

4. Agencement de soupape de commande selon au moins l'une quelconque des revendications 1 à 3, **caractérisé en ce que** la pression pilote (P_VST, P_VST1, P_VST2) agit pendant le fonctionnement normal sur la soupape autorétentive (1) et la soupape d'activation (2).

5. Agencement de soupape de commande selon au moins l'une quelconque des revendications précédentes, **caractérisé en ce qu'**une pression de commande (P_NOR) caractérisant le mode de fonctionnement normal agit en mode de fonctionnement normal sur la soupape autorétentive (1) et la soupape d'activation (2).

6. Agencement de soupape de commande selon au moins l'une quelconque des revendications précédentes, **caractérisé en ce qu'**une pression de commande (P_NS) caractérisant le mode de fonctionnement de secours agit sur la soupape d'activation (2) en mode de fonctionnement de secours.

7. Agencement de soupape de commande selon au moins l'une quelconque des revendications précédentes, **caractérisé en ce que** le coulisseau de commande (29) de la soupape d'activation (2) peut être sollicité par la pression d'activation (P_A) et la pression pilote (P_VST).

8. Agencement de soupape de commande selon au moins l'une quelconque des revendications précédentes, **caractérisé en ce que** le coulisseau de commande (30) de la soupape autorétentive (1) peut être sollicité par la pression d'activation (P_A) et la pression pilote (P_VST).

9. Agencement de soupape de commande selon au moins l'une quelconque des revendications précédentes, **caractérisé en ce que** le coulisseau de commande (29, 30) de la soupape autorétentive (1) et celui de la soupape d'activation (2) présentent, sur une extrémité axiale, à chaque fois un piston de commande (20, 24), sur lequel s'appuie à chaque fois un ressort de rappel (31, 32), tandis que la pression pilote (P_VST) peut agir sur un piston de commande (22, 23) sur l'autre extrémité axiale respective.

10. Agencement de soupape de commande selon au moins l'une quelconque des revendications précédentes, **caractérisé en ce que** les côtés frontaux tournés axialement l'un vers l'autre des deux coulisseaux de commande (19, 34) peuvent être sollicités par la pression pilote (P_VST) dans la soupape de régulation d'embrayage (3, 41) régulée par la pression pilote.

11. Agencement de soupape de commande selon au moins l'une quelconque des revendications précédentes, **caractérisé en ce que** l'extrémité du coulisseau de commande axialement plus long (19) de la soupape de régulation d'embrayage (3, 41) tournée à l'opposé du côté frontal pouvant être sollicité par la pression pilote peut être sollicitée par un ressort de rappel (33) avec une force de rappel.

12. Agencement de soupape de commande selon au moins l'une quelconque des revendications précédentes, **caractérisé en ce que** le ressort de rappel (33) s'appuie sur un piston (28) du coulisseau de commande plus long (19) de la soupape de régulation d'embrayage (3, 41), dont les deux côtés frontaux peuvent être sollicités par une pression de commande d'embrayage (P_K, P_K1, P_K2).

13. Agencement de soupape de commande selon au moins l'une quelconque des revendications précédentes, **caractérisé en ce que** le dispositif de commande d'embrayage (4, 40) présente un piston (6) pouvant être guidé dans un cylindre (5), qui peut être sollicité par un ressort de rappel (7) entourant coaxialement le piston (6) avec une force de rappel agissant dans la direction d'ouverture de l'embrayage.

14. Agencement de soupape de commande selon au moins l'une quelconque des revendications précédentes, **caractérisé en ce que** la pression d'alimentation (P_V1, P_V2) pouvant être acheminée à la soupape de régulation d'embrayage (3, 41) est au même niveau de pression que la pression d'activation (P_A).

15. Agencement de soupape de commande selon au moins l'une quelconque des revendications précédentes, **caractérisé en ce que** la pression pilote (P_VST) peut être appliquée au côté frontal éloigné du ressort de rappel du coulisseau de commande plus long (19) ainsi qu'au côté frontal opposé du coulisseau de commande plus court (34, 92) de la soupape de régulation d'embrayage (3, 41), et **en ce que** la soupape autorétentive (1) ainsi que la soupape d'activation (2) peuvent être sollicitées à leurs extrémités éloignées du ressort de rappel par une pression de commande (P_NOR) caractérisant le mode de fonctionnement normal,
la pression d'activation (P_A) pouvant être commutée à la soupape de régulation d'embrayage (3, 41) en cas de défaillance de cette pression de commande (P_NOR) pour réaliser un mode de fonctionnement de secours,
la pression d'activation (P_A) maintenant le dispositif de commande d'embrayage (4, 40) en cas de défaillance de la pression pilote (P_VST) dans sa position de fermeture jusqu'à ce que la pression de commande (P_D) dépendant du régime, au niveau de la soupape autorétentive (1), soit en dessous d'une valeur limite de pression prédéterminée.

16. Agencement de soupape de commande selon au moins l'une quelconque des revendications précédentes, **caractérisé en ce que** la pression pilote (P_VST) peut être appliquée aux côtés frontaux éloignés du ressort de rappel du coulisseau de commande (30) de la soupape autorétentive (1) et du coulisseau de commande long (19) de la soupape de régulation d'embrayage (3),
**en ce que** l'extrémité axiale éloignée du ressort de rappel du coulisseau de soupape (29) et un espace de pression (72) de la soupape d'activation (2) peuvent être sollicités avec la pression d'activation (P_A),
**en ce qu'**une pression de commande de fonctionnement de secours (P_NS) peut être appliquée sur le côté frontal, sollicité par le ressort de rappel, du coulisseau de soupape (29) de la soupape d'activation (2), pour déclencher un mode de fonctionnement de secours de la boîte de vitesses,
et **en ce qu'**en cas de défaillance de la pression pilote (P_VST), la pression d'activation (P_A) peut être commutée de la soupape d'activation (2) à la soupape de régulation d'embrayage (3),
laquelle maintient le dispositif de commande d'embrayage (4) dans sa position de fermeture jusqu'à ce que la pression de commande (P_D) dépendant du régime au niveau de la soupape autorétentive (1) soit en dessous d'une valeur limite de pression prédéterminée.

17. Agencement de soupape de commande selon au moins l'une quelconque des revendications précédentes, **caractérisé en ce qu'**une première pression pilote (P_VST1) peut être appliquée au côté frontal éloigné du ressort de rappel d'un coulisseau de commande (19) sollicité par ressort d'une première soupape de régulation d'embrayage (3) et une deuxième pression pilote (P_VST2) peut être appliquée au côté frontal éloigné du ressort de rappel d'un coulisseau de commande (90) sollicité par ressort d'une deuxième soupape de régulation d'embrayage (41),
**en ce que** les deux soupapes de régulation d'embrayage (3, 41) sollicitent à chaque fois l'un de deux dispositifs de commande d'embrayage (4, 40) avec une pression de commande d'embrayage respective (P_K1, P_K2),
**en ce que** les deux pressions pilotes (P_VST1, P_VST2) peuvent être appliquées à une soupape d'échange (43), au moyen de laquelle les côtés frontaux éloignés du ressort de rappel des coulisseaux de commande (29, 30) de la soupape d'activation (2) et de la soupape autorétentive (1) peuvent être sollicités en alternance avec la plus élevée des deux pressions pilotes (P_VST1, P_VST2),
**en ce qu'**en cas de défaillance des deux pressions pilotes (P_VST1, P_VST2) ainsi qu'en présence d'une pression de commande (P_D) dépendant du régime au niveau de la soupape autorétentive (1), la pression d'activation (P_A) peut être transmise de la soupape autorétentive (1) par le biais de la soupape d'activation (2) à une soupape de sélection (42), au moyen de laquelle, en fonction de sa position de commutation, la pression d'activation (P_A) peut être transmise au côté frontal éloigné du ressort de rappel du coulisseau de commande court (34) de la première soupape de régulation d'embrayage (3) ou au côté frontal éloigné du ressort de rappel du coulisseau de commande court (90) de la deuxième soupape de régulation d'embrayage (41),
de sorte que le premier dispositif de commande d'embrayage (4) soit maintenu dans sa position de fermeture jusqu'à ce que la pression de commande (P_D) dépendant du régime au niveau de la soupape autorétentive (1) soit en dessous d'une valeur limite de pression prédéterminée, tandis que le deuxième dispositif de commande d'embrayage (40) est amené ou maintenu dans une position ouverte.

18. Agencement de soupape de commande selon la revendication 17, **caractérisé en ce que** l'extrémité éloignée du ressort de rappel du coulisseau de commande (44) de la soupape de sélection (42) peut être sollicitée avec la pression de commande d'embrayage régulée (P_K1) de la première soupape de régulation d'embrayage (3), de sorte que lorsque cette pression de commande d'embrayage régulée (P_K1) est en dessous d'une valeur de pression prédéfinie, le coulisseau de commande (44) de la soupape de sélection (42) puisse être amené axialement dans sa deuxième position de commutation, dans laquelle, pour réaliser un mode de fonctionnement de secours, la pression d'activation (P_A) peut être transmise de cette soupape de sélection (42) au côté frontal éloigné du ressort de rappel du coulisseau de commande court (92) de la deuxième soupape de régulation d'embrayage (41),
de sorte que cette pression d'activation, en agissant sur le côté frontal éloigné du ressort de rappel du coulisseau de commande (92) sollicité par ressort de cette soupape (41), transmette au deuxième dispositif d'embrayage (40) une pression d'alimentation (P_V2) en tant que pression de commande d'embrayage (P_K2) pour le réglage en mode de fonctionnement de secours du deuxième dispositif de commande d'embrayage (40) dans la direction de fermeture.

19. Agencement de soupape de commande selon au moins l'une quelconque des revendications précédentes, **caractérisé en ce**
**qu'**une première pression pilote (P_VST1) peut être appliquée au côté frontal éloigné du ressort de rappel d'un coulisseau de commande sollicité par ressort (19) d'une première soupape de régulation d'embrayage (3) et une deuxième pression pilote (P_VST2) peut être appliquée au côté frontal éloigné du ressort de rappel d'un coulisseau de commande sollicité par ressort (90) d'une deuxième soupape de régulation d'embrayage (41),
en ce que les deux soupapes de régulation d'embrayage (3, 41) sollicitent à chaque fois l'un de deux dispositifs de commande d'embrayage (4, 40) avec une pression de commande d'embrayage respective (P_K1, P_K2),
en ce que les deux pressions pilotes (P VST1, P_VST2) peuvent être appliquées à une soupape d'échange (43), au moyen de laquelle le côté frontal éloigné du ressort de rappel du coulisseau de commande (29) de la soupape d'activation (2) peut être sollicité en alternance avec la plus élevée des deux pressions pilotes (P_VST1, P VST2),
en ce qu'une pression de commande dépendant du régime (P_D) peut être appliquée au coulisseau de commande (30) de la soupape autorétentive (1),
en ce qu'en cas de défaillance des deux pressions pilotes (P_VST1, P_VST2) ainsi qu'en présence d'une pression de commande dépendant du régime prédéterminée (P_D) au niveau de la soupape autorétentive (1), la pression d'activation (P_A) peut être transmise de la soupape autorétentive (1) par le biais de la soupape d'activation (2) à une soupape de sélection sans ressort de rappel (47),
au moyen de laquelle, en fonction de sa position de commutation, la pression d'activation (P_A) peut être transmise au côté frontal éloigné du ressort de rappel du coulisseau de commande court (34) de la première soupape de régulation d'embrayage (3) ou au côté frontal éloigné du ressort de rappel du coulisseau de commande court (92) de la deuxième soupape de régulation d'embrayage (41),
en ce qu'une extrémité du côté frontal du coulisseau de commande (44) dans la soupape de sélection (47) peut être sollicitée par la pression de commande d'embrayage régulée (P_K1) de la première soupape de régulation d'embrayage (3) et son autre extrémité du côté frontal peut être sollicitée par la pression de commande d'embrayage régulée (P_K2) de la deuxième soupape de régulation d'embrayage (41),
de sorte qu'en cas de défaillance des pressions pilotes (P VST1, P_VST2) due à une panne, le premier dispositif de commande d'embrayage (4) se trouvant en dernier dans la position de fermeture, ou le deuxième dispositif de commande d'embrayage (41), soit maintenu dans sa position de fermeture jusqu'à ce que la pression de commande dépendant du régime (P_D) au niveau de la soupape autorétentive (1) soit en dessous de la valeur seuil de pression prédéterminée.

20. Agencement de soupape de commande selon au moins l'une quelconque des revendications précédentes, **caractérisé en ce que** la pression d'activation (P_A) est prélevée du courant de fluide sous pression qui est utilisé en mode de fonctionnement normal pour le mode de glissement de l'au moins un embrayage de démarrage.
